(19) Europäisches Patentamt / European Patent Office / Office européen des brevets

(11) **EP 2 619 083 B1**

(12) **EUROPEAN PATENT SPECIFICATION**

(45) Date of publication and mention
of the grant of the patent:
**27.04.2016 Bulletin 2016/17**

(21) Application number: **10765983.1**

(22) Date of filing: **23.09.2010**

(51) Int Cl.:
*B64B 1/08* ^(2006.01)     *B64B 1/14* ^(2006.01)
*B64B 1/62* ^(2006.01)     *B64B 1/40* ^(2006.01)
*B64B 1/30* ^(2006.01)     *B64B 1/22* ^(2006.01)
*B64B 1/02* ^(2006.01)

(86) International application number:
**PCT/EP2010/064070**

(87) International publication number:
**WO 2011/042316 (14.04.2011 Gazette 2011/15)**

(54) **"MOMOHELI II" LIFTING MODULE AND VEHICLES**

"MOMOHELI II" HEBEMODUL UND FAHRZEUGE          "

MODULE DE LEVAGE "MOMOHELI II" ET VÉHICULES

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**31.07.2013 Bulletin 2013/31**

(73) Proprietors:
• **Monsch, Daniel**
  **7076 Parpan (CH)**
• **Monsch, Hans**
  **5400 Baden (CH)**

(72) Inventors:
• **Monsch, Daniel**
  **7076 Parpan (CH)**
• **Monsch, Hans**
  **5400 Baden (CH)**

(74) Representative: **OK pat AG**
**Industriestrasse 47**
**6300 Zug (CH)**

(56) References cited:
DE-A1- 10 251 280    DE-C- 542 470
GB-A- 267 473        JP-A- 2005 271 831
US-A- 1 004 662      US-A- 4 078 509
US-A1- 2002 167 702  US-A1- 2007 102 570

**EP 2 619 083 B1**

**Description**

**Field of the invention**

The invention generally relates to lifting modules for carrying a payload and/or passengers. It also relates to air and submarine lifters which comprise at least one such module and to the use of such modules for carrying payloads and/or passengers.

**Background of the invention**

Conventional airships employ helium or another lifting gas that is lighter than air to provide buoyancy or "lift." Temperature and pressure variations resulting from altitude changes and varying atmospheric conditions generally cause the helium contained within the hull of such an airship to expand or contract, resulting in a constantly varying volume of helium. To maintain a constant internal pressure, conventional airships employ inside fabric ballonets. Ballonets are air-filled bags that are located inside the envelope of an airship. This passive system reacts to changes in helium volume by passively filling with outside air, or exhausting air to the atmosphere, to compensate for changes in helium volume and maintain the hull pressure within acceptable limits. A conventional airship is pressurized only to the minimum extent necessary to maintain its hull shape under flight and mooring loads.

Positive buoyancy is obtained when the amount of buoyancy generated by the lifting gas is greater than the mass (weight) of the airship and its payload, thereby enabling the airship to ascend without the need for any other form of assistance, such as dynamic lift and/or vectored engine thrust. Negative buoyancy is obtained when the amount of buoyancy generated by the lifting gas is less than the mass (weight) of the airship and its payload, thereby causing the airship to descend and preventing it from ascending or remaining aloft without employing some other form of assistance, such as dynamic lift and/or vectored engine thrust.

In a conventional airship, the pilot and crew have no way of actively manipulating the buoyancy of the airship other than releasing helium into the atmosphere or releasing disposable ballast (such as sand or water). In order to compensate for the loss of weight during a flight as fuel is consumed, a conventional airship usually begins its flight statically heavy. To overcome this heaviness and become airborne, the airship either has to generate dynamic lift by performing a takeoff run similar to that of an airplane (but generally of shorter length), or, if so equipped, by using vectored engine thrust to ascend to an altitude where the additional weight can again be carried by forward movement and dynamic lift. Even if the airship takes off statically heavy, it normally arrives at its destination statically light, after fuel is consumed during the flight, making the landing maneuver very difficult. In a conventional airship, this statically light condition can be overcome only by employing negative lift to force the airship down via forward airspeed, or by employing vectored engine thrust to force the airship downward. The negative lift method requires a minimum length of runway or similar cleared surface for useful operation, while the vectored engine thrust method consumes a great deal of fuel and requires expensive vectored engines.

Another drawback of conventional airships is the difficulty experienced in offloading passengers and cargo. That is, as passengers and cargo are offloaded, the airship becomes increasingly buoyant. Therefore, ballast (such as sand or water) must be loaded onto the airship to compensate for the increased buoyancy and subsequently offloaded to allow the airship to become airborne again. Alternatively, the airship may be firmly affixed to the ground via cables or other fastening devices, or through a constantly compensating downward force generated by vectored engine thrust.

The most recent types of airships provide active vertical control by manipulating the ratio of air to lifting gas contained within the airship, and thus the overall mass of the airship. This manipulation is accomplished by actively compressing and/or decompressing the lifting gas or internal air, with the resulting pressure differential borne primarily by the hull and/or an internal pressure tank depending upon the configuration. Such a system is described in the international patent application WO 2006/137880 A2 with title "Systems for actively controlling the aerostatic lift of an airship".

Another approach has been followed by the patent application US 2009/0072082 A1, where a propulsion system for an airship or hybrid aircraft includes a propeller and a pivot mechanism connected to the propeller. The pivot mechanism enables the propeller to pivot around a first pivot axis between a maneuver thruster position and an emergency ballonet fill position. Under normal conditions, when the propulsion system is disposed in the maneuver thruster position, the pivot mechanism also enables the propeller to pivot around a second pivot axis to control the attitude and thrust of the vehicle. However, in an emergency descendent situation, the propeller may be rotated to the emergency ballonet fill position. Filling of the ballonets is carried out for controlling the pressure inside the envelope to maintain a balance between the rapidly increasing ambient pressure (that occurs due to the rapid descendent) and the effects of the contraction of the lighter-than-air gas (i.e. the lifting gas).

A generic lifting module known from the document US 2002/0167702 A1 comprises an envelope with inside and outside surfaces for storing a lifting fluid and a flexible membrane with upper and lower surfaces that extends inside the envelope and that defines together with the envelope first and second compartments inside of the envelope. The envelope and the flexible membrane comprise a mutual circular connection site, which is arranged in a distance to a base pole of the envelope. The lifting module comprises a valve for inflating or deflating lifting fluid into or from the first compartment and a fluid inlet with conveying means for inflating or deflating a second fluid into or from the second compartment. The envelope may be of essentially spherical shape and the envelope that partially encloses the second compartment comprises a coating layer that is tight for the second fluid.

## Technical problem to be solved

The independent transport of very heavy and/or very large payload allowing vertical take off and landing and thus exact positioning of the cargo on the ground is up to now not possible. Furthermore, there are no solutions known which would enable an aircraft to float in the ambient air while carrying some kind of payload without consuming too much fuel for active control or propelling systems.

The horizontal maneuverability of a big airship is limited due to its size and rigidity. The exact positioning of a payload in windy conditions is not solved yet. Loading and unloading of a very heavy payload without the usage of external ballast for buoyancy compensation (like water or sand) is up to now not possible. The maximum weight range of a payload is determined by the buoyancy generated by the airship. The lifting of heavier weights is not possible until now.

## Objectives and summary of the invention

It is thus an objective of the present invention to provide a lifting vehicle, e.g. an airship or submarine lifter, which avoids the above listed disadvantages and which is capable of floating in an ambient fluid.

It is another objective of the present invention to provide a floating vehicle, e.g. an airship, for independent transport of very heavy and/or very large payloads and/or passengers allowing vertical take off and landing and thus exact positioning of the cargo. It is a further objective of the present invention to provide a floating vehicle, e.g. an airship, which is more flexible, upgradable, more robust and more reliable than known airships.

In accordance with a first aspect of the present invention, a lifting module is proposed, the lifting module comprising:

(a) an envelope, comprising an inside surface and an outside surface, for storing a lifting fluid;
(b) a flexible membrane, comprising an upper surface and a lower surface, extending inside said envelope and being arranged so that said envelope together with said flexible membrane define a first compartment and a second compartment inside the envelope;
(c) a valve for inflating or deflating lifting fluid into or from said first compartment; and
(d) a fluid inlet and conveying means for inflating or deflating a second fluid through said fluid inlet into or from said second compartment.

The lifting module according to a first aspect of the present invention is characterized in that said envelope is of essentially spherical shape with a zenith pole, a base pole, and a diameter there between; the envelope and the flexible membrane comprising a mutual circular connection site, which is arranged in a distance to the base pole of the envelope, said distance being equal or less than 33% of the diameter of the envelope and said flexible membrane assuming, when the second compartment is empty, the shape of a spherical calotte with a calotte height that is essentially equal to said distance. The lifting module according to the first aspect of the present invention is further characterized in that the inside surface of the envelope that partially encloses the first compartment and the upper surface of the flexible membrane comprise a common cover layer that is tight for the lifting fluid and in that the envelope that partially encloses the second compartment comprises a coating layer that is tight for the second fluid.

In accordance with a second aspect of the present invention, an air lifter that comprises at least one such lifting module is proposed, the air lifter being characterized in that the lifting fluid is helium or a helium-hydrogen mix, the ambient fluid and the ballast fluid being air.

In accordance with a third aspect of the present invention, a submarine lifter that comprises at least one such lifting module is proposed, the submarine lifter being characterized in that the lifting fluid is air, the ambient fluid and the ballast fluid being water.

In accordance with a fourth aspect of the present invention, a method of controlled lifting a pay load with a lifting module is proposed. The method comprising the steps of providing:

(a) an envelope, comprising an inside surface and an outside surface, and with a lifting fluid stored therein; the envelope being of essentially spherical shape with a zenith pole, a base pole, and a diameter there between; the envelope preferably consisting of a lightweight material strong enough to bear overpressure;
(b) a flexible membrane, comprising an upper surface and a lower surface, extending inside said envelope and being arranged so that said envelope together with said flexible membrane define a first compartment and a second compartment inside the envelope;

(c) a valve for inflating or deflating lifting fluid into or from said first compartment;

(d) a fluid inlet and conveying means for inflating or deflating a second fluid through said fluid inlet into or from said second compartment,

(e) a rigid frame defining an opening and arranged on the outside surface of said envelope, wherein at least 67% of the diameter of said envelope, when filled with said lifting fluid, protrudes upwards through said opening, and wherein said rigid frame is accomplished for wearing a pay load that is attached to the lifting module;

(f) a suspension net attached to said frame for holding said envelope in said frame; and

(g) a drive accomplished to actuate the conveying means for introducing ballast fluid into said second compartment according to an actual need for buoyancy, wherein said ballast fluid is ambient fluid.

The method of controlled lifting a pay load with a lifting module according to the fourth aspect of the present invention is characterized in that the envelope and the flexible membrane comprise a mutual circular connection site, which is arranged in a distance to the base pole of the envelope, said distance being equal or less than 33% of the diameter of the envelope and said flexible membrane assuming, when the second compartment is empty, the shape of a spherical calotte with a calotte height that is essentially equal to said distance. The method of controlled lifting a pay load with a lifting module according to the fourth aspect is further characterized in that the inside surface of the envelope that partially encloses the first compartment and the upper surface of the flexible membrane comprise a common cover layer that is tight for the lifting fluid; in that the envelope that partially encloses the second compartment comprises a coating layer that is tight for the second fluid; and in that the method further comprises the step of:

(h) providing a load hook that is attached to the rigid frame by suspension ropes, and

(i) attaching a payload to the load hook.

The invention also concerns accomplishing and utilization of at least one module according to the present invention as a submarine lifter for carrying a payload in or under water. The invention also concerns accomplishing and utilization of at least one module according to the present invention as an air lifter for carrying a payload and/or passengers in air. The invention generally relates to a new type of floating vehicle allowing the lift, transport and positioning of (pay-) loads, such as very heavy loads with a preferred weight of at least 10 t and with an especially preferred weight range from 40 t up to several hundreds of tons.

More particularly, embodiments of the invention relate to a system for actively controlling the mass and the buoyancy of the floating vehicle by manipulating the ratio of ballast fluid to lifting fluid contained within the envelope of the module or vehicle, and thus the overall mass. This manipulation is accomplished by actively adding an outside fluid to or by subtracting an outside fluid (e.g. air or water) from the system, with the resulting pressure differential borne only by the module's envelope.

Another embodiment of the invention relates to a system for the composition of two or more individual modules allowing for a change in the lifting power according to the specific mass of the transport goods (payload).

Another embodiment of the invention relates to mechanical systems allowing horizontal twisting of the modules of the vehicle to steer and to optimize aerodynamics and trimming during cruise. This horizontal twisting may redundantize vertical tail and side rudders (including their weight). This is achieved by changing the angle between the modules through a winch-based system, which allows limited horizontal rolling of the cogged frames with respect to each other.

Another embodiment of the invention relates to a system for the modular composition of two or more modules to bigger floating vehicles, doubling, tripling etc. the overall buoyancy according to the specific mass of the (pay-) load and fuel and required flight altitude. Two modules are joined via rolling couplings attached to the frames and to the envelopes at the height of the envelope equator (contact area between envelopes). The stability and steering is provided by trusses and cables which can be lengthened and shortened by a winch system.

The invention has the advantage that the entire envelope of a module in fact becomes a pressure tank without the need of any additional tanks, hulls or ballonets using less material and thus less weight. Further advantageous embodiments and inventive features derive from the dependent claims.

## Brief description of the drawings

Further characteristics and advantages of the invention will in the following be described in detail by means of the description and by making reference to the drawings. These drawings only depict some preferred embodiments of the present invention without limiting the scope of the present invention. It is shown in:

Fig. 1    a schematic cross-section of a single lifting module, according to the present invention, comprising an envelope (hull) and an inside flexible divider membrane in a state where the first compartment is filled with a lifting fluid while the second compartment is empty or almost empty;

Fig. 2      a schematic cross-section of the single lifting module, according to the present invention, in a state of maximal overpressure where the first compartment is filled with a lifting fluid while the second compartment is not filled with a ballast fluid;

Fig. 3      a sectional view of the single lifting module of Fig. 2, showing a mutual circular connection site between the envelope and the flexible divider membrane, and a lifting fluid valve;

Fig. 4      a sectional view of the single lifting module of Fig. 2, showing a first embodiment of a rigid frame and its attachment to the hull, and an optional tensioning rope with its anchor in combination with a first ring member;

Fig. 5      a sectional view of the single lifting module of Fig. 2, showing a second embodiment of a rigid frame and its attachment to the hull, and an optional tensioning rope with its anchor in combination with a movable catch on the rigid frame;

Fig. 6      a sectional view of the single lifting module of Fig. 2, showing a third embodiment of a rigid frame and its attachment to the hull, and an optional tensioning rope with its anchor in combination with a catch part of the rigid frame;

Fig. 7      a side view of the single lifting module according to one of the Figs. 4 to 6, while floating in an ambient fluid and carrying a payload;

Fig. 8      a front view of the single lifting module of Fig. 4, with the optional nonmovable first ring member in place and with the second ring member of the rigid frame lowered to the ground;

Fig. 9      a side view of an air lifter with three lifting modules according to one of the Figs. 4 to 6, with all three lifting modules aligned straight, while floating in an ambient fluid and carrying a large payload;

Fig. 10     a top view of an air lifter with three lifting modules according to one of the Figs. 4 to 6, with the three lifting modules in a twisted state, while changing direction during cruising in an ambient fluid;

Fig. 11     a top view of an air lifter with six lifting modules according to one of the Figs. 4 to 6, with the six lifting modules in a twisted state, while changing direction during cruising in an ambient fluid;

Fig. 12     a schematic detailed view of two mating elements for connecting modules;

Fig. 13     a schematic detailed view of certain aspects of a transition piece for connecting modules.

**Description of preferred embodiments of the invention**

In the following, preferred definitions and terms are presented as used throughout this patent application:

- "single-pressure-envelope" describes the concept of using only one hull or envelope 2 per lifting module 1 under pressure to provide buoyancy and vertical control in comparison to other systems using additional features (like additional hulls, tanks or ballonets);
- "air lifter 40" of "submarine lifter 47" may include one or more lifting modules 1 with its features for optimizing floating control;
- "airship" or "air lifter 40" describes an air-floating vehicle which may include one or more lifting modules with features for optimizing aerodynamic control and air drag;
- "submarine lifter 47" describes a vehicle floating in or under water that may include one or more lifting modules with features for optimizing hydrodynamic control;
- "lifting module 1" or "lifting vehicle" are used as synonyms for the terms "module" or "vehicle";
- "mass control system" (MCS) refers to actively changing the pressure of a lifting fluid inside the envelope and thus the overall mass and buoyancy;
- "pressure envelope" refers to the specific composition and physical qualities of the hull or envelope 2 of a lifting module;

- "frame" or ring-shaped frame describes a construction, assembly or body which is rigid (within the range of resilience of the envelope 2 under minimum overpressure);
- "fluid" describes a non-solid material, such as a gas (e.g. air or nitrogen), a liquid (e.g. water), or a gas/liquid mixture; "lifting fluid" or "lifting gas" refers to a gas lighter than ambient fluid (e.g. helium or helium-hydrogen mixture, or air);
- "valve" describes any means for introducing a fluid into a compartment and/or releasing a fluid from a compartment. Such valves can be for only one single use (e.g. for irreversibly closing an opening through which a lifting fluid had been entered into a first compartment) or for repeated opening and closing. Whereas mechanically opening is preferred, the closing of the valve can be carried out by mechanically closing a pipe or similar inlet as well as closing such an inlet by gluing or welding for example.

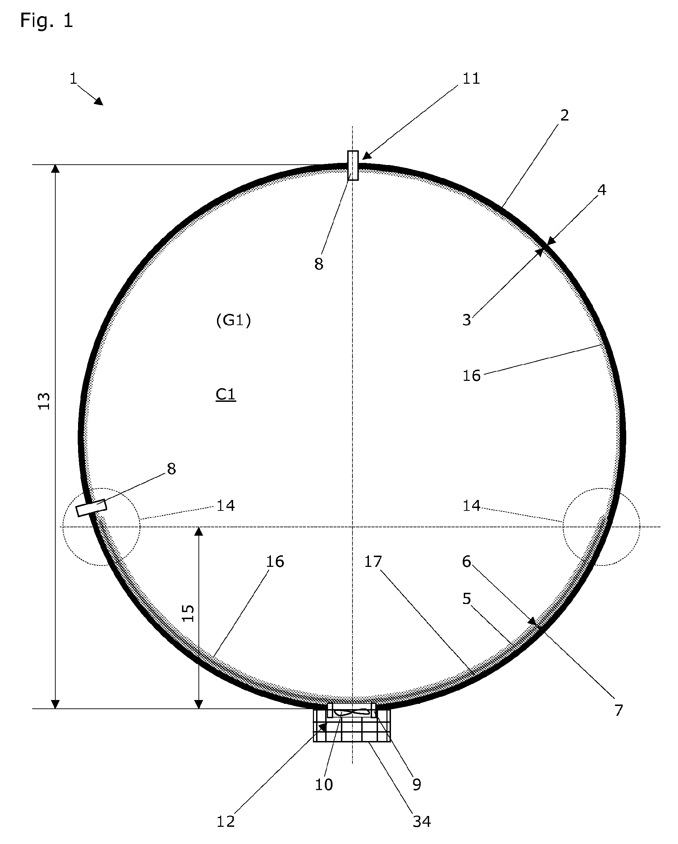

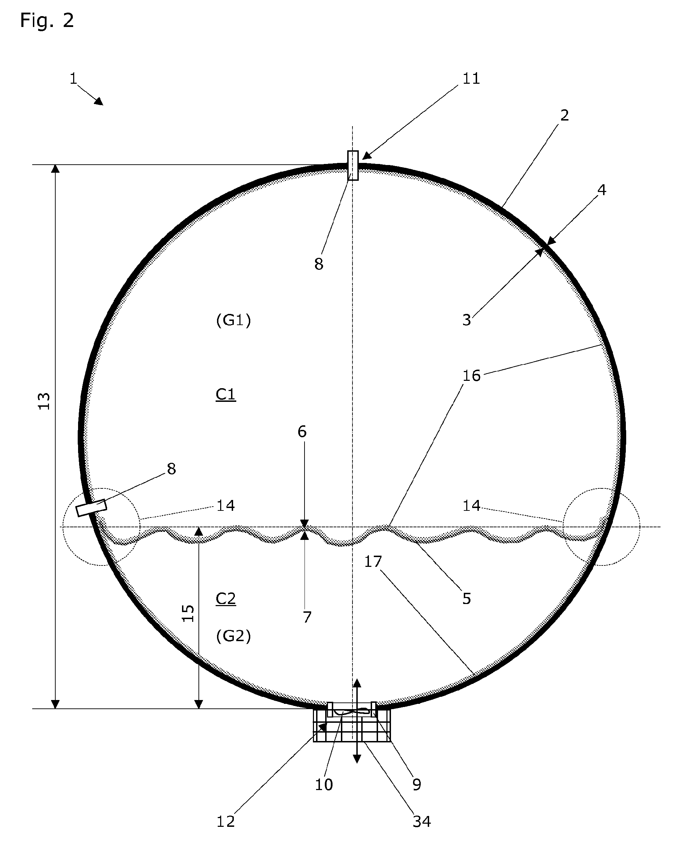

The basic concept of the present invention is described in connection with the Figures 1 and 2.

The Fig. 1 shows a schematic cross-section of a single lifting module 1, according to the present invention, comprising an envelope or hull 2 and an inside flexible divider membrane 5 in a state where the first compartment C1 is filled with a lifting fluid while the second compartment C2 is empty or almost empty. The lifting module 1 comprises an envelope 2, comprising an inside surface 3 and an outside surface 4, for storing a lifting fluid G1. The envelope is preferably configured in the shape of a sphere in order to optimize the ratio between volume and surface of the envelope 2 and thus minimize its weight. The sphere-like shape minimizes the stress within the envelope 2 (in spherical pressure containers tangential tension does not occur). Therefore, the thickness of the envelope 2 is halved as compared to cylindrical pressure containers. However, slight deviations from the spherical shape can be tolerated. The envelope 2 is thus of essentially spherical shape with a zenith pole 11, a base pole 12, and a diameter 13 there between.

The lifting module 1 also comprises a flexible membrane 5, comprising an upper surface 6 and a lower surface 7. The flexible membrane 5 extends inside said envelope 2 and is arranged such that the envelope 2 together with the flexible membrane 5 define a first compartment C1 and a second compartment C2 inside the envelope 2. The envelope 2 and the flexible membrane 5 comprise a mutual circular connection site 14, which is arranged in a distance 15 to the base pole 12 of the envelope 2. At this circular connection site 14, the flexible membrane 5 is sealingly attached to the inside surface 3 of the envelope 2. This distance 15 is equal or less than 33% of the diameter 13 of the envelope 2. When the second compartment C2 is empty or almost empty (see Fig. 1), the flexible membrane 5 assumes the shape of a spherical calotte with a calotte height that is essentially equal to said distance 15.

The inside surface 3 of the envelope 2 that partially encloses the first compartment C1 and the upper surface 6 of the flexible membrane 5 comprise a common cover layer 16 that is tight for the lifting fluid G1. The envelope 2 that partially encloses the second compartment C2 comprises a coating layer 17 that is tight for the second fluid G2. Accordingly, the compartments C1 and C2 comprise individual layers 16,17 that are impermeable for the fluids contained in these compartments. The lower surface 7 of the flexible membrane 5 has essentially the same area as the inside surface 3 of the envelope 2 that partially encloses the second compartment C2. The material for the flexible membrane 5 may be chosen from elastic or non-elastic sheets, depending also on the respective elasticity of the common cover layer 16.

The Fig. 2 shows a schematic cross-section of a single lifting module 1, according to the present invention, comprising an envelope or hull 2 and an inside flexible divider membrane 5 in a state where the first compartment C1 is filled with a lifting fluid while the second compartment C2 is empty but to be filled with air to the allowed maximum overpressure of envelope 2. The lifting module 1 further comprises a valve 8 for inflating or deflating lifting fluid G1 into or from said first compartment C1 as well as a fluid inlet 9 and conveying means 10 for inflating or deflating a second fluid G2 through said fluid inlet 9 into or from said second compartment C2. Preferably, the conveying means 10 is a pump or fan in operational combination with a valve. The valve 8 for inflating or deflating lifting fluid G1 into or from said first compartment C1 can be located within or close to the circular connection site 14 of the lifting module 1 or at any other convenient site, e.g. at or close to the zenith pole 11 (see Figs. 1 and 2). Preferably, the valve 8 is located close or at the zenith pole 11 of the envelope 2. Preferably, the lifting module 1 comprises a protective cage 34 that is built around the fluid inlet 9.

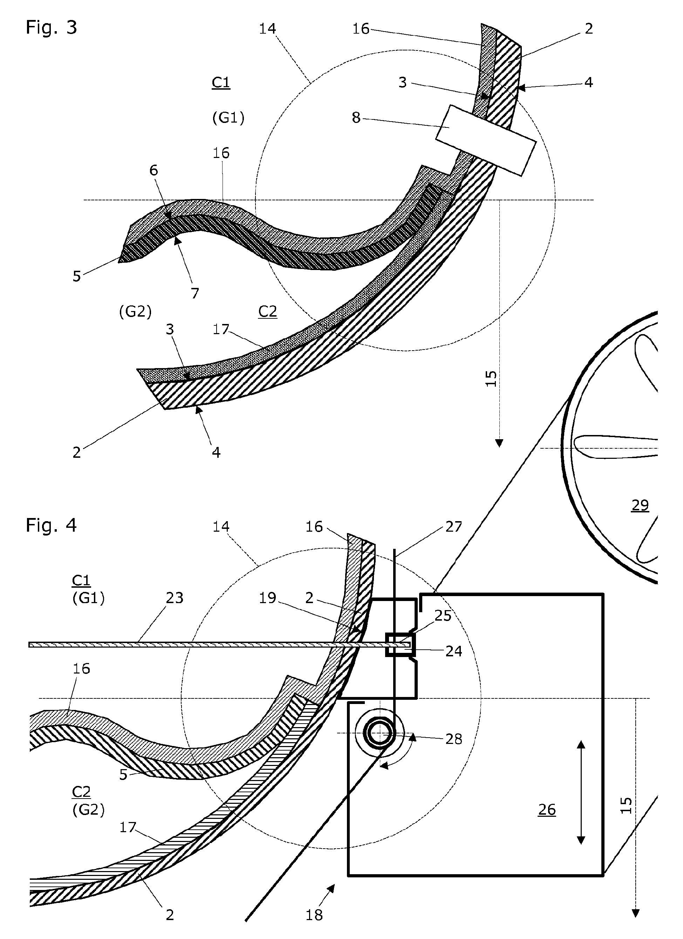

Figure 3 shows a sectional view of the single lifting module 1 of Fig. 2, showing a mutual circular connection site 14 between the envelope 2 and the flexible divider membrane 5, and a lifting fluid valve 8. At a higher level than defined by the distance 15, the common cover layer 16, which is impermeable for the lifting fluid G1, is deposited or laminated onto the inside surface 3 of the envelope 2 and onto the upper surface 6 of the flexible membrane 5. At a level lower than defined by the distance 15, the coating layer 17, which impermeable for the second or ballast fluid G2, is deposited or laminated onto the inside surface 3 of the envelope 2. At this mutual circular connection site 14, the flexible membrane 5 is sealingly connected to the inside surface 3 of the envelope 2.

Figure 4 shows a sectional view of the single lifting module 1 of Fig. 2, exhibiting a first embodiment of a rigid frame 18 and its attachment to the hull of envelope 2, and an optional tensioning rope 23 with its anchor 24 in combination with a first ring member 22. As the envelope 2 preferably is configured in the shape of a sphere, it possesses high structural stability when there is enough lifting fluid G1 inside the first compartment C1. In order to further enhance this structural stability, the lifting module 1 comprises a rigid frame 18 that defines an opening 19 and that is connected to and arranged on the outside surface 4 of said envelope 2. The rigid frame 18 is located such that at least 67% of the diameter 13 of said envelope 2, when the first compartment C1 is filled with said lifting fluid G1, protrudes upwards through said opening 19. The said rigid frame 18 is accomplished for wearing a heavy pay load 100 that is attached to the lifting module 1. The lifting module 1 preferably further comprises a suspension net 20 that is attached to said frame 18 for holding said envelope 2 in said frame 18. Such suspension nets 20 are known *per se.*

The lifting module 1 preferably also comprises a drive 21 that is accomplished to actuate the conveying means 10 for introducing ballast fluid G2 into said second compartment C2 according to an actual need for buoyancy. Actually, said ballast fluid G2 preferably is ambient fluid G3. The first compartment C1 is filled with compressed lifting fluid G1 while the second compartment C2 is partially filled with the ballast fluid G2. The fact that the ballast fluid G2 is inserted from the outside is illustrated in Fig. 2 by a double arrow and a propeller 10. As can be seen in Fig. 2, the membrane 5 is pushed upwards as more and more fluid G2 is pressed into the second compartment C2. Since the air is heavier than the lifting gas, the air inside the second compartment C2 forms a lake (the "air ballast lake") with a more or less horizontal surface.

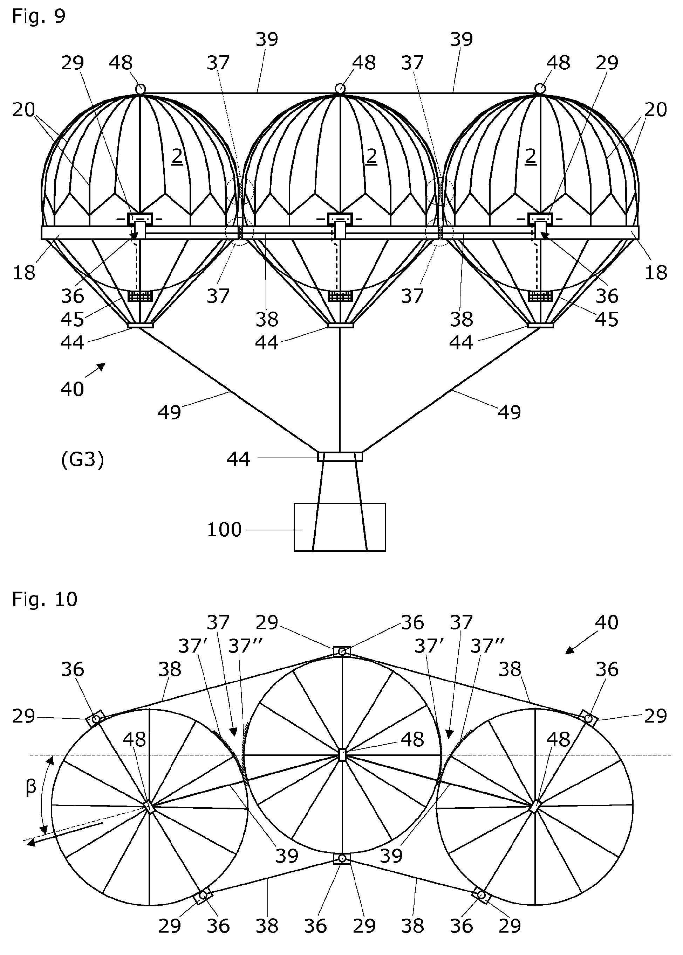

From the outside to the inside, the envelope 2 preferably comprises the following layers: a protective layer (UV and weather proof), a fiber laminate and a gas proof laminate (He and $H_2$ impermeable) or common cover layer 16. It further comprises a load bearing or suspension net (UV-proof) 20, which is shown in the Figs. 9-11. Such an envelope 2 is able to withstand the pressure resulting from the compression of the lifting gas G1.

Since the envelope 2 only has a very limited degree of elasticity, the following rule of thumb can be postulated: The total volume VT of the envelope 2 and the volumes V1 and V2 of the compartments C1, C2 are dependent, as follows:

$$VT = V1 + V2 \qquad\qquad [1]$$

Since none of the lifting gas G1 can escape (except for a very small amount that eventually leaks out through the envelope 2 and/or membrane 5), the lifting gas G1 is compressed as the volume V1 of its compartment C1 gets smaller while the volume of the compartment C2 grows. The internal pressures in the compartments C1 and C2 are identical as long as C2 is filled or partially filled.

Preferably, the lifting modules 1 are designed so that ballast fluid G2 is released out of the compartment C2 after a valve (e.g. a check valve) was released or opened. An automatic discharging is possible since the compressed lifting fluid G1 has the tendency to expand. This will push the membrane 5 downwards and the fluid G2 out of the compartment C2. It is an advantage of this approach, that simply by opening or releasing a valve the mass of the lifting module 1 automatically reduces while the buoyancy increases.

Preferably an actively controlled check valve (e.g. a non return fluid-outlet valve, not shown) is employed. It may consist of two layers: A bottom layer is a perforated plate. The top layer comprises a perforated plate holding a number of flap gates and a quadrangular hole next to each flap gate allowing airflow from the conveying means 10 into the envelope 2 preventing automatically air-backflow. In this position the holes of the check valve next to the flap gates are shut by the bottom grid. For decompression the two layers are shifted against each other allowing the ballast fluid G2 to escape to the outside through the holes. The check valve may be switched into the decompression using a remote control or a mechanical system.

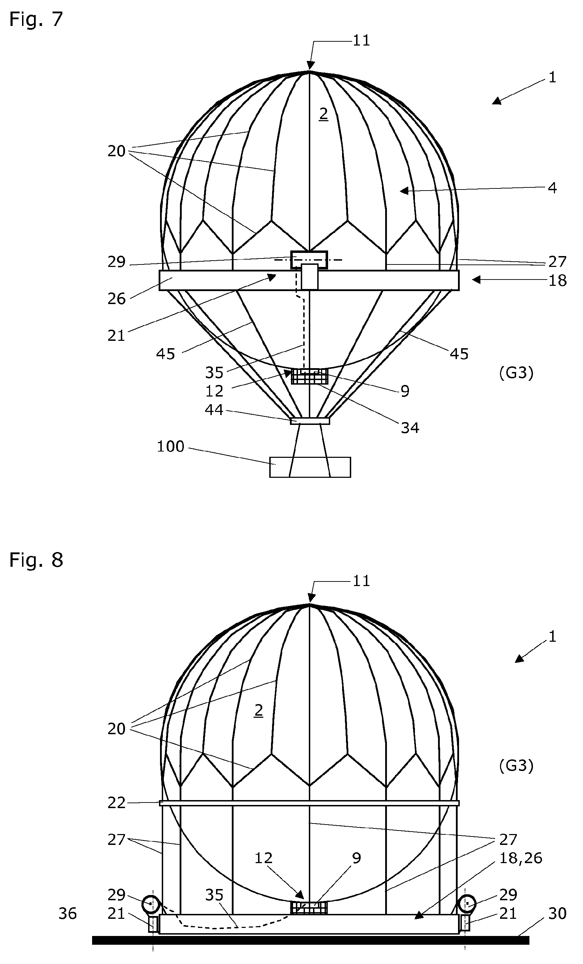

This principle enables easy buoyancy control of a floating lifting module 1 (cf. Fig. 7, for instance) or a floating air lifter 40 (cf. Fig. 9, for instance). The respective mechanism is herein referred to as active mass control system (MCS). The lifting module 1 or the floating air lifter 40 is able to perform a vertical take off and landing without dynamic lift or vectored engine thrust. According to the present invention, only one envelope 2 per lifting module 1 is employed to provide buoyancy and vertical control. That is, the lifting module 1 has one single pressure-envelope 2 only. This mechanism also helps to compensate for changes in the static weight of the lifting module 1, air lifter 40, or submarine lifter 47 as a result of operational factors such as fuel consumption, payload exchange, ambient temperature change, humidity (in air) and/or ambient air or water pressure changes. The conveying means 10 compresses the lifting fluid G1 within the upper part of the envelope 2 since the volume V1 decreases as volume V2 increases. The overall volume VT= V1 + V2 of the envelope remains more or less stable. As the lifting fluid G1 is compressed and displaced by the ballast fluid G2 under pressure from the lower part of the envelope 2, the lifting module 1, air lifter 40, or submarine lifter 47 becomes statically heavier and less buoyant. Conversely, if a sufficient amount of ballast fluid G2 is released, the lifting module 1, air lifter 40, or submarine lifter 47 will become statically light enough to ascend. By pumping varying amounts of ballast fluid G2 into and out of the lifting modules 1, static weight (and thus rate of ascent and/or descent) can be precisely controlled. The control function may be performed by the controller.

A drive 21 (see Fig. 7), accomplished to actuate the conveying means 10 for introducing ballast fluid G2 into said second compartment C2 according to an actual need for buoyancy is preferably provided in all lifting modules 1, for which said ballast fluid G2 is ambient fluid G3.

In case of a lifting module 1 or floating air lifter 40 being accomplished for use in ambient air (in the ambient fluid G3), the buoyancy is adjusted or controlled by manipulating the ratio of air (serving as ballast fluid G2) to lifting gas G1 contained within the envelope 2. In this case, a first gas is used as the lifting fluid G1 and a second gas is used as the ballast fluid G2. The first gas G1 has a density which is smaller than the density of air and the second gas G2 has a density which is equal to or larger than the density of air. Very well suited as lifting gas G1 is pure Helium or a gas mixture comprising at least 50% of Helium. A mixture of lifting gases may comprise helium and/or hydrogen and/or heated air or combinations thereof. The utilization or addition of an inert gas (like nitrogen) in the mixture of lifting gases can be used to minimize the danger of a possible ignition. The lifting gases provide all of the lift so that no additional energy is consumed to lift the lifting module 1 or air lifter 40. Thus the overall mass of the module 1 or air lifter 40 can be adjusted by actively adding or subtracting outside air to or from the second compartment C2 in the bottom part of the envelope 2. The envelope 2 preferably is made of helium and/or hydrogen proof laminate, fiber laminate and a protective layer providing structural integrity to the lifting module 1. The fibers for the fiber laminate can be selected from a group comprising carbon fibers, glass fibers, metal fibers, and any mixtures thereof.

In case of a lifting module 1 is accomplished as a submarine lifter 47 used in or under water (in the ambient fluid G3), the buoyancy is adjusted or controlled by manipulating the ratio of water (serving as ballast fluid G2) to lifting gas G1 (preferably air or nitrogen) contained within the envelope 2. Thus the overall mass of the module 1 or submarine lifter 47 can be adjusted by actively adding or subtracting water to or from the second compartment C2 in the bottom part of the envelope 2.

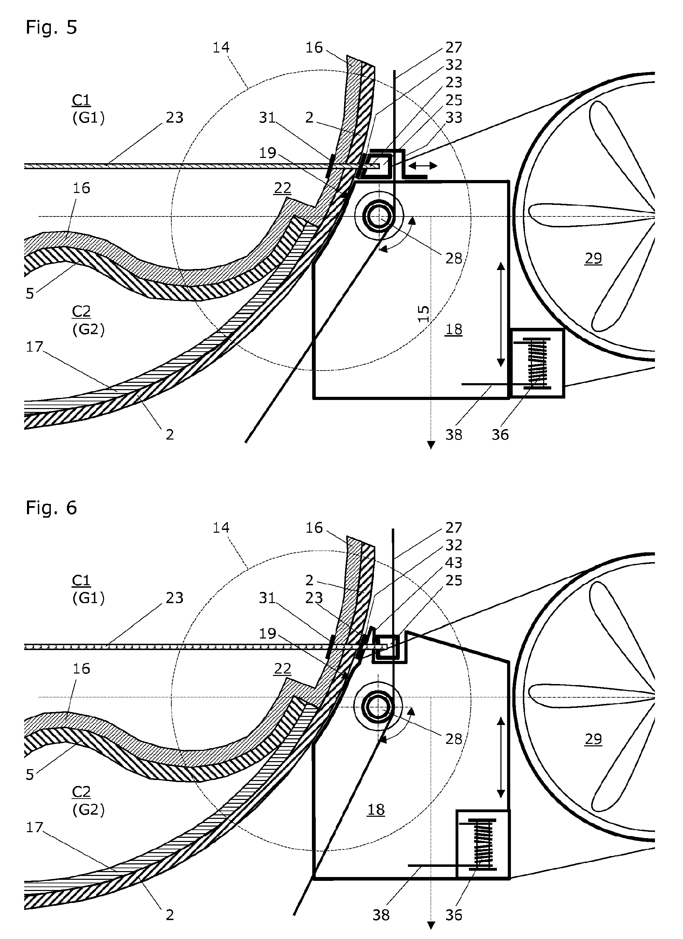

In order to even more enhance structural stability, the lifting module 1 may further comprise a number of tensioning ropes 23 and anchors 24. The tensioning ropes 23 extend essentially horizontally through the envelope 2, the common cover layer 16 as well as across the first compartment C1 of the lifting module 1. The anchors 24, for connecting each end 25 of a tensioning rope 23 to the rigid frame 18, are located at each one of said tensioning rope ends 25. In Fig. 4, the main engine is shown in a higher position than in Figs. 5 and 6. This position can be chosen according to actual needs of a distinct embodiment of a lifting module.

Figure 5 shows a sectional view of the single lifting module 1 of Fig. 2, showing a second embodiment of a rigid frame 18 and its attachment to the hull 2. Optional tensioning ropes 23 with their anchors 24 in combination with a movable catch 33 on the rigid frame 18 are depicted as well. Also seen is a vertical rope 27 that belongs to the suspension net 20. In this second embodiment of the rigid frame 18, said rigid frame 18 of the lifting module 1 is attached to the vertical ropes 27 by lifting winches 28 that are located on or in the rigid frame 18. With the action of these lifting winches 28, the rigid frame 18 of the lifting module 1 is vertically movable with respect to the envelope 2. The tensioning ropes 23 comprise on each one of their ends 25 an inside washer 31 and an outside washer 32 for holding the tensioning ropes 23 in place relative to the envelope 2 of the lifting module 1. In this second embodiment of the rigid frame 18, the rigid frame 18 comprises catches 33 that are movably attached to the rigid frame 18. These catches 33 can be moved horizontally and/or they can be pivoted about a horizontal axis (not shown). These catches 33 are accomplished to engage over said anchors 24 for forming a force-fit connection between said rigid frame 18 and said tensioning ropes 23. When gripping the anchors 24 with said catches 33, the rigid frame 18 is fixed in an operational position (compare Fig. 7).

In this Fig. 5, the distance 15, about which the mutual circular connection site 14 is remote to the base pole 12 of the envelope 2, is indicated to be preferably on the same level as the lifting winch 28 for winding and unwinding of the vertical ropes 27 and the axis of the main engine 29. In addition, a torsion winch 36 for winding and unwinding torsion ropes 38 (see. Fig. 9) is shown to be attached to the outside of the rigid frame 18. This position can be selected in an embodiment of an airlifter 40 as shown in Fig. 9 and 10. The lifting module 1 preferably comprises two main engines 29 that are attached to the frame 18. These main engines 29 are designed to provide thrust with respect to the ambient fluid G3 for providing a relative movement or thrust of said lifting module 1 in the ambient fluid G3.

Figure 6 shows a sectional view of the single lifting module 1 of Fig. 2, showing a third embodiment of a rigid frame 18 and its attachment to the hull 2. Optional tensioning ropes 23 with their anchors 24 in combination with a catch part 43 of the rigid frame 18 are depicted as well. Again seen is a vertical rope 27 that belongs to the suspension net 20. This vertical rope 27 preferably feeds through a hole in the anchor 24 in order to guide the catch 43 into the gap between the anchor 24 and the outside washer 32. In this third embodiment of the rigid frame 18, said rigid frame 18 of the lifting module 1 also is attached to the vertical ropes 27 by lifting winches 28 that are located on or in the rigid frame 18. With the action of these lifting winches 28, the rigid frame 18 of the lifting module 1 is vertically movable with respect to the envelope 2. The tensioning ropes 23 comprise on each one of their ends 25 an inside washer 31 and an outside washer 32 for holding the tensioning ropes 23 in place relative to the envelope 2 of the lifting module 1. In this third embodiment of the rigid frame 18 however, the anchor 24 is distant to the outside washer 32 by a gap. The rigid frame 18 comprises catch parts 43 that move vertically together with the rigid frame 18. These catch parts 43 are accomplished to engage in the gap between said anchors 24 and outside washers 32 for forming a force-fit connection between said rigid frame 18 and said tensioning ropes 23. This force-fit connection is achieved by vertically lifting the rigid frame 18 by action of the lifting winches 28 until the catch parts 43 tightly engage in the gap between said anchors 24 and outside washers 32. In this position again, the rigid frame 18 is fixed in an operational position (compare Fig. 7). The catch parts 43 of the rigid frame 18 comprise vertical slits (not shown) for accommodating the tensioning rope ends 25.

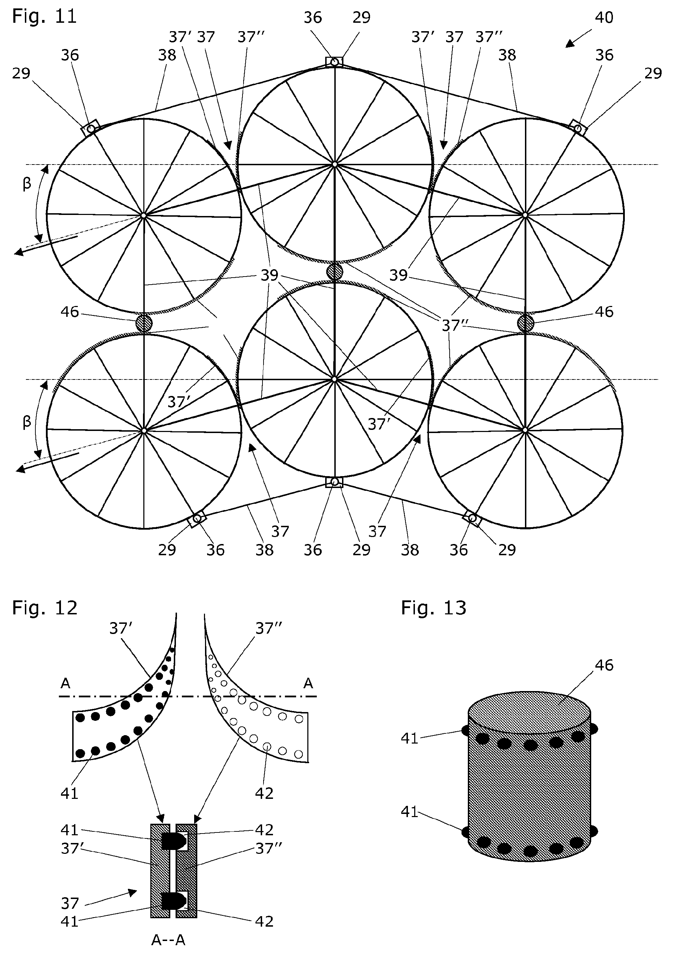

In this Fig. 6, the distance 15, about which the mutual circular connection site 14 is remote to the base pole 12 of the envelope 2, is indicated to be preferably on the same level as the axis of the main engine 29. However, the lifting winch 28 for winding and unwinding of the vertical ropes 27 is at a different level. In addition, a torsion winch 36 for winding and unwinding torsion ropes 38 (see. Fig. 9) is shown to be attached to the inside of the rigid frame 18. This position should be selected in an embodiment of an airlifter 40 as shown in Fig. 11, because there must be space for the transition piece 46 (see also Fig. 13) that is to be placed outside of the rigid frame 18. The lifting module 1 preferably comprises two main engines 29 that are attached to the frame 18. The main engines 29 are designed to provide thrust with respect to the ambient fluid G3 for providing a relative movement or thrust of said lifting module 1 in the ambient fluid G3.

In a variant to these second or third embodiments of the rigid frame 18, the tensioning ropes 23 (with their washers 31,32 and anchors 24) are completely omitted (not shown). In this variant case again, the rigid frame 18 of the lifting module 1 is attached to the vertical ropes 27 of the suspension net 20 by lifting winches 28 that are located on or in the rigid frame 18. With the action of these lifting winches 28, the rigid frame 18 of the lifting module 1 is vertically movable with respect to the envelope 2. When pressure changes occur inside the compartments C1 and C2 of the envelope 2, the envelope may undergo elastic expansion or contraction that results in changes of the envelope volume. Such volume changes naturally occur within the range of elasticity of the hull material but contribute to respective changes in the periphery of the sphere-like envelope 2. This concept of a rigid frame 18 that is vertically movable with respect to the envelope 2 enables adaption of the mounting height of the rigid frame 18 with respect to the vertical diameter 13 and to the actual size of the envelope 2. It is recalled here that preferably at least 67% of the diameter 13 of said envelope 2, when the compartment C1 is filled with the lifting fluid G1, protrudes upwards through the opening 19 of the rigid frame 18.

The rigid frame 18 defines a circular opening 19 that is adapted to the overall shape of the envelope 2. The embodiments which are shown in the Figures all comprise such a ring-shaped frame 18. To increase mechanical stability of the lifting modules 1, cables may be tautened diametrically through the frame 18 and envelope 2. It is important however, that these cables are sealably connected to the envelope 2 in order to prevent leakage of lifting fluid G1 out of the envelope 2. In the case of a submarine lifter 47, leakage of water into the envelope 2 shall be prevented as well.

The rigid frame 18 defines a plane which typically is horizontal. The two main engines 29 are situated in the same horizontal plane to provide for stability of the floating lifting module 1, air lifter 40, or submarine lifter 47. When the lifting module 1 is embodied as an air lifter, preferably, the main engines 29 are arranged so that their position is close to the center of aerodynamic resistance of the lifting module 1, when a lighter payload 100 (cf. Fig. 7, for instance) is carried by the lifting module 1. This adds to the horizontal stability when the lifting module 1 is cruising in air, especially when cruising at higher speeds. When the lifting module 1 is embodied as a submarine lifter, preferably, the main engines 29 are arranged so that their position is close to the center of gravity of the lifting module 1, when a heavier payload 100 (not shown) is carried by the lifting module 1. This adds to the horizontal stability when the lifting module 1 is cruising under water, especially when cruising at lower speeds.

Figure 7 shows a side view of the single lifting module 1 according to one of the Figs. 4 to 6, while floating in an ambient fluid G3 and carrying a payload 100. The rigid frame 18 is attached to the suspension net 20 and fixed thereon in an operational position. The rigid frame 18 may consist of one single ring (see. Figs. 5 and 6) or of a first and second ring member 22,26 (see Fig. 4). Thus, the rigid frame 18 or the second ring member 26 thereof is seen here. A load hook 44 that comprises a turnable portion (which preferably is actively turnable around its middle vertical axis) is attached to the rigid frame 18 by suspension ropes 45. A payload 100 is attached to the load hook 44. The ropes between the load hook 44 and the payload 100 are extendible by winches that are positioned on the turnable portion of the load hook 44 in order to lower or lift the payload 100. By additionally actively turning the turnable portion of the load hook 44, the payload 100 can be exactly aligned to place the payload in a desired position.

The main engine 29 is designed to provide thrust with respect to the ambient fluid G3 for providing a relative movement or thrust of the lifting module 1 in the ambient fluid G3. The main engine 29 is also accomplished and capable to act as the drive 21 for actuating the conveying means 10 that is accomplished for introducing ballast fluid G2 into the second compartment C2. In this case, the drive 21 is a hydraulic pump that is activated by the main engine and that is driving a propeller, which acts as the conveying means 10. The conveying means 10 is operatively connected to the drive 21 with a drive line 35 (here a preferably flexible hydraulic line). Alternatively, the drive 21 is e.g. an electric generator that is activated by the main engine 29 and that is driving a propeller, which acts as the conveying means 10; the drive line 35 being a preferably flexible electric line. Alternatively, the drive 21 is an air compressor that is activated by the main engine 29 and that is driving a propeller, which acts as the conveying means 10; the drive line 35 being a preferably flexible compressed air line. In any case, the conveying means 10 are accomplished for introducing ballast fluid G2 into the second compartment C2 according to an actual need for buoyancy. Preferably, the conveying means 10 are also accomplished for providing power to the winches 28,36 and other equipment, such as a drive for turning the turnable portion of the load hook 44.

Figure 8 shows a front view of the single lifting module 1 of Fig. 4, with the non-movable first ring member 22 in place and with the second ring member 26 of the rigid frame 18 lowered to the ground 30. Obviously, at least a part of the suspension ropes 45 now are visible as vertical ropes 27, linking the two rings 22,26 of the rigid frame 18. Also visible here are the drives 21 that may be covered by attachment elements of the main engines 29 (as depicted in Fig. 7). Because of the possibility of lowering and lifting the entire rigid frame 18 or at least the second ring member 26 thereof, the drive line 35 that links at least one of the drives 21 to the conveying means 10 is advantageously accomplished as a flexible line. With the frame 18 in this parking position, the lifting module 1 easily and safely can be moored for attaching or detaching payloads as well as for crew and passengers boarding or disembarking. In all cases it is preferred to accomplish the rigid frame 18 as a lightweight framework, preferably and mainly built of fiber composites and/or light metals and/or light metal alloys.

Lowering and lifting the entire rigid frame 18 or at least the second ring member 26 thereof also allows for adjusting the vertical position of the main engines 29 with respect to the envelope 2. This enables an adjustment with respect to the center of mass or the center of aerodynamic resistance of the lifting module 1 or air lifter 40. If a very heavy payload 100 is attached, the center of mass is lower than normal. In this case, the position of the main engines 29 can be lowered to provide for a more stable setup or trim while changing speed. In addition, vertical adjustment of the main engines 29 with respect to the rigid frame 18 can be done manually (e.g. using a winch or lifting device), or it can be performed semi-automatically or automatically (e.g. using an electromechanical or a hydraulic system). The actual adjustment of the main engines 29 preferably is made when the lifting module 1 or the air lifter 40 is in a stationary position. However, while aloft, the centers of mass or air drag can also be adjusted by lifting or lowering the payload 100. Differing from the Fig. 7, but still within the gist of the present invention, the suspension ropes 45 can be longer as actually drawn, because their length may need to be sufficient in order to enable complete lowering of the rigid frame 18 to the ground 30.

Depending on the actual spatial positions of the center of aerodynamic resistance and of the center of gravity of a lifting module 1, the main engines 18 preferably can be arranged so that their position is closer to the one or to the other of these two centers of gravity and aerodynamic resistance of the lifting module 1. Thus, an optimal spatial position of the main engines 18 may be chosen to achieve maximal horizontal stability for a lifting module 1 while also taking into account the type of environmental fluid in which the lifting module 1 is floating, its actual size and payload as well as the cruising speed intended.

Figure 9 shows a side view of an air lifter 40 with three lifting modules 1 according to one of the Figs. 4 to 6 while floating in an ambient fluid G3 and carrying a large payload 100. All three lifting modules 1 are coupled to each other by coupling elements 37 (see Fig. 12) that are located on the height of the rigid frames 18 and on the height of the largest horizontal diameter of the envelopes 2. When coupling two or more lifting modules 1 together, it is preferred that the largest horizontal diameter of the envelopes 2 is equal to the diameter of the rigid frames 18. In order to keep the lifting modules 1 together, there are torsion winches 36 attached to the rigid frames 18, these torsion winches 36 being linked to each other by torsion ropes 38. These torsion winches 36 are accomplished to wind and unwind these torsion ropes 38 in order to keep the torsion ropes 38 tense. The horizontal distances between all torsion winches 36 are equal here, that is why the three lifting modules 1 are aligned straight here.

Each one of the lifting modules 1 comprises a load hook 44 to which the payload 100 is attached by load ropes 49. In order to ensure stable arrangement of the three lifting modules 1, the zenith poles 11 of theses lifting modules 1 are in each case equipped with a stay winch 48. These stay winches 48 are connected to each other by stays 39. These stay winches 48 are accomplished to wind and unwind these stays 39 in order to keep the stays 39 tense. The horizontal distances between all stay winches 48 are equal to the horizontal distances between the winches 36, that is why the vertical axes of the three lifting modules 1 are aligned in parallel here. Alternative attachments of the payload 100 to the load hooks 44 are within the obvious selection of a skilled person.

Figure 10 shows a top view of an air lifter 40 with three lifting modules 1 according to one of the Figs. 4 to 6 while cruising in an ambient fluid G3. Again, all three lifting modules 1 are coupled to each other by coupling elements 37 (see Fig. 12) that are located on the height of the rigid frames 18 and on the height of the largest horizontal diameter of the envelopes 2. When coupling two or more lifting modules 1 together, it is preferred that the largest horizontal diameter of the envelopes 2 (the equator) is equal to the diameter of the rigid frames 18. In order to keep the lifting modules 1 together, there are torsion winches 36 attached to the rigid frames 18, these torsion winches 36 being linked to each other by torsion ropes 38. These torsion winches 36 are accomplished to wind and unwind these torsion ropes 38 in order to keep the torsion ropes 38 tense. The air lifter 40 is moving to the left side (see arrow). The horizontal distances between the torsion winches 36 on the right side of the moving air lifter 40 (on the upper side of this drawing) are larger than the horizontal distances between the torsion winches 36 on the left side of the moving air lifter 40 (on the lower side of this drawing), that is why the three lifting modules 1 are in a twisted state here. This twisted state of the lifting modules 1 enables the moving air lifter 40 to actively change the direction of movement. The change in the direction of movement is due to the different orientation of the main engines 29 that are attached to the rigid frames 18 and supported by the different aerodynamic drag on the left and right side of the airship 40. The deviation of the direction of the main engines 29 of the front lifting module 1 with respect to the middle axis of the airlifter 40 is indicated by the angle β. This mechanical system allows horizontal twisting of the lifting modules 1 of the air lifter 40 to steer and to optimize aerodynamics and trimming during cruise. This horizontal twisting redun-dantizes vertical tail and side rudders (including their weight). This is achieved by changing the angle between the lifting modules 1 through a winch-based system, which allows limited horizontal rolling of the cogged frames 18 with respect to each other.

Preferably, the whole composition of the envelopes 2 is sheathed in an elastic fabric (called stocking, not shown) allowing the twisting of the lifting modules 1 without wrinkling. This provides for improved aerodynamics and weather protection. It is further preferred that such an air lifter 40 equipped with such stocking comprises an aerodynamic self sustaining construction of nose and tail (both not shown), both comprising inlet pressure tubes or fiber battens optionally including lifting gas pressure balloon, nose and tail stocking. This stocking is optional. It is elastic. It has certain advantages to employ such a stocking. The stocking provides for an improved aerodynamic surface and it gives additional stability. Furthermore, the stocking is able to protect the envelopes 2 of the lifting modules 2 against mechanical wear and against UV-light. The stocking may also be employed in case of underwater embodiments.

Several embodiments of the invention are specifically designed for underwater usage. In most cases it is sufficient to employ just one dedicated lifting module 1 since due to the larger density of water, the payload 100 "appears" to be less heavy than in air. In a preferred underwater embodiment that is accomplished as a submarine lifter, a gas is used as lifting fluid G1 and water is used as the ballast fluid G2. The conveying means 10 may be employed to press water as ballast fluid G2 into the second compartment C2 in order to make the lifting module 1 heavier and in order to compress the lifting gas G1 at the same time.

In order to make sure that the underwater lifting modules 1 operate reliably, the material used as envelope 2 may be chosen so as to take into account the large difference of the densities of the fluid G1 inside the compartment C1 and the fluid G3 outside the envelope 2. The envelope 2 may be coated (e.g. using a nanocoating) in order to prevent accumulation of algae and/or other deposits which would make the whole lifting module 1 heavier and which would eventually also attack the integrity of the envelope 2 and in order to reduce water drag.

Two possible underwater scenarios are contemplated:

- A lifting module 1 floating underneath the ocean surface in sea water carries a claw carrying piece (or clutch). This claw carrying piece of the submarine lifting module 1 is employed to grab material from the sea bed, for instance. Such a lifting module 1 can be used in a dynamic setup where it is being controlled via a cable, fiber or wireless connection. Two or more main engines 29 may be situated at the frame 18 in order to move the lifting module 1 in any direction with respect to the surrounding water G3.

- A number of lifting modules 1 are arranged in order to carry a payload 100, which is e.g. a sea cable or a pipeline. Again, each lifting module 1 is equipped with a conveying means 10 in order to increase or reduce buoyancy. A (central) control designed to establish communication links to the lifting modules 1 may be employed in order to e.g. control the distance of a sea cable or pipeline with respect to the sea bed. This embodiment is relatively static since the lifting modules 1 basically are only moveable up and down. Small horizontal and spatial positional corrections can be achieved using reasonably small main engines 29.

In a preferred underwater embodiment, the lifting module(s) 1 may comprise rudders. These rudders are preferably attached to the frame 18. By adjustment of the rudder position, the position of the lifting module(s) 1 can be controlled if there is an underwater drift.

Depending on the construction of the attachments of the payload 100 to the load hooks 44, there are also stay winches 48 situated on the zenith poles 11 of the lifting modules 1 (see Fig 10). The stay winches 48 are connected to each other by stays 39. Alternatively, there are only stays 39 that have a fixed length and that keep the distance of the zenith poles 11 of the lifting modules 1 constant.

Figure 11 shows a top view of an air lifter 40 with six lifting modules 1 according to one of the Figs. 4 to 6, with the six lifting modules 1 in a twisted state, while changing direction during cruising in an ambient fluid G3. Again, all six lifting modules 1 are coupled to each other by coupling elements 37 (see Fig. 12) that are located on the height of the rigid frames 18 and on the height of the largest horizontal diameter (or equator) of the envelopes 2.

Everything that has been said to Fig. 10 also correspondingly applies to Fig. 11. In addition, transition pieces 46 (see Fig. 13) are placed between the corresponding lifting modules 1 that are located in front, in the middle, and at the rear of the air lifter 40 that is moving to the left side (see arrows). As in Fig. 10, also in this embodiment of Fig. 11, the load hooks 44 of all lifting modules 1 can be linked together with stays as well, which serves for even greater stabilization of the air ship 40 (not shown).

It can also be seen from Fig. 11 that only on the outer side of the air lifter 40, main engines 29 are attached to the rigid frames 18 of the individual lifting modules 1. It is preferred however, that in order to keep the lifting modules 1 together, there are torsion winches 36 attached to both sides of all the rigid frames 18, these torsion winches 36 being linked to each other by torsion ropes 38 (the torsion winches 36 and torsion ropes 38 located between the adjacent lifting modules 1 are not shown in Fig. 11 for better overview). These torsion winches 36 are accomplished to wind and unwind these torsion ropes 38 in order to keep the torsion ropes 38 tense and in order to stabilize the entire shape of the air lifter 40.

Figure 12 shows a schematic detailed view of two mating elements for connecting modules or coupling elements 37 respectively. In this preferred embodiment, each coupling element 37 has two mating elements, a first mating element 37' and a second mating element 37", as schematically depicted plates in Fig. 12. The first mating element 37' is accomplished as a plate that comprises bolts 41 protruding about the surface of this plate. The second mating element 37" is accomplished as a plate that comprises holes 42, wherein the size of the bolts 41 fits the size of the holes 42 (compare also section A-A in Fig. 12). The first mating element 37' with the bolts 41 is given a blue color, whereas the second mating element 37" with the holes 42 is given a red color for better distinction. The same colors are given to the respective elements 37',37" in the Figures 10 and 11. It is to be noted here that the second mating elements 37" that are combined with a transition piece 46 (see Fig. 13) may exhibit greater horizontal extension than the second mating elements 37" that are combined with the first mating elements 37' (compare with Fig. 11).

Figure 13 shows a schematic detailed view of certain aspects of a transition piece 46 for connecting selected lifting modules 1 (see Fig. 11). Between the sidewise connected lifting modules 1, such an additional transition piece 46 is applied. The transition piece 46 may be a cylindrical cogged wheel serving to change the direction of rotation of the rigid frames 18. The purpose of the transition piece 46 is to allow the horizontal twisting of the air lifter 40 and thus enabling horizontal steering in this arrangement. This arrangement provides for a very compact setup with the capability of lifting very heavy payloads 100. According to the similar action and equipment with bolts 41 like the first mating elements 37', the transition piece 46 is marked with blue color (see also Figs. 11 and 12). At the touching site of the equators of two envelopes 2, and below that, at the respective touching site of two frames 18, there can be placed a transition piece 46 in each case. Alternatively however, there can be an extended single transition piece 46 that at the same time serves for the touching sites of both, the envelopes 2 and the frames 18. In any case, the transition piece(s) 46 prevent adjacent envelopes 2 and frames 18 from mutual friction.

Two basic setups or arrangements of lifting modules 1 to air lifters 40 are depicted in the Figs. 9-11. Two or more lifting modules 1 may either be arranged in a row, as shown in Figs. 9 and 10. Three lifting modules 1 may be arranged in a triangle or four lifting modules 1 may be arranged in a square setup (both not shown). It is obvious that there are a number of other arrangements lateral or vertical (e.g. in a third dimension array).

The underwater embodiments or submarine lifters 47 can be employed for a number or applications and purposes, such as:

- Gathering or craning of material, such as minerals (e.g. manganese nodules) or methane hydride;
- Assisting in the deployment or installation of underwater installations, facilities or equipment;
- Gathering and lifting of sweat water from sweat water sources below sea level;
- Positioning of underwater sensors or equipment, e.g. for tsunami detection or for communication purposes or floating underwater tunnels;
- Military applications;
- Gas and/or oil mining;
- Rescuing and retrieving.

The airship embodiments or air lifters can be employed for a number or applications and purposes, saving time and energy. It offers new possibilities concerning the production and assembly of big machinery, making obsolete the disassembly, transport in components and assembly at destination of big or heavy machinery. Examples are:

- Transport of very heavy or oversized goods which can not be transported on roads because of size or weight or because there are no roads.
- Enabling the assembly or mounting of installations at not or hardly accessible construction sites (e.g. antennas, power line masts and cables, bridge elements etc.)
- Gathering or craning of material, such as minerals or natural resources;
- Assisting in the deployment or putting in place of installations, facilities or equipment, machinery (e.g. transformers, generators and turbines);
- Energy efficient transport over long distances because there is no need of energy to keep up buoyancy
- Humanitarian and military applications.

It will be understood that many variations could be adopted based on the specific structure hereinbefore described without departing from the scope of the invention as defined in the following claims; this is also true for any combination of the herein disclosed elements that is practically applicable. The same reference numbers in the drawings refer to the same elements of the invention; this also applies in cases where not all reference numbers are cited in the specification.

The use of at least one lifting module 1 for carrying a payload 100 in air or under water according to the present invention enables companies to carry out new methods in e.g. transportation, mining and telecommunications.

The same reference numbers refer to the same or similar elements of the present invention even when they are not described in detail in all cases.

Reference numbers:

| | | | |
|---|---|---|---|
| 1 | lifting module | 32 | outside washer |
| 2 | envelope | 33 | movable catch |
| 3 | inside surface | 34 | protective cage |
| 4 | outside surface | 35 | drive line |
| 5 | flexible membrane | 36 | torsion winch |
| 6 | upper surface | 37 | coupling element |
| 7 | lower surface | 37' | first mating (connecting) ele-ment |
| 8 | valve | | |
| 9 | fluid inlet | 37" | second mating (connecting) |
| 10 | conveying means | | element |
| 11 | zenith pole | 38 | torsion rope |
| 12 | base pole | 39 | stay |
| 13 | diameter | 40 | air lifter, airship |
| 14 | mutual circular connection site | 41 | bolts |
| 15 | distance | 42 | holes |
| 16 | common cover layer | 43 | catch part of rigid frame |
| 17 | coating layer | 44 | load hook |
| 18 | rigid frame | 45 | suspension rope |
| 19 | opening | 46 | transition piece |
| 20 | suspension net | 47 | submarine lifter |
| 21 | drive | 48 | stay winch |
| 22 | first ring member | 49 | load rope |
| 23 | tensioning rope | | |
| 24 | anchor | 100 | pay load |
| 25 | end of a tensioning rope | C1 | first compartment |
| 26 | second ring member | C2 | second compartment |
| 27 | vertical rope | G1 | lifting fluid |
| 28 | lifting winch | G2 | second fluid, ballast fluid |
| 29 | main engine | G3 | ambient fluid |
| 30 | ground | | |
| 31 | inside washer | | |

**Claims**

**1.** Lifting module (1) comprising:

(a) an envelope (2), comprising an inside surface (3) and an outside surface (4), for storing a lifting fluid (G1);
(b) a flexible membrane (5), comprising an upper surface (6) and a lower surface (7), extending inside said envelope (2) and being arranged so that said envelope (2) together with said flexible membrane (5) define a first compartment (C1) and a second compartment (C2) inside the envelope (2);
(c) a valve (8) for inflating or deflating lifting fluid (G1) into or from said first compartment (C1); and
(d) a fluid inlet (9) and conveying means (10) for inflating or deflating a second fluid (G2) through said fluid inlet (9) into or from said second compartment (C2),

wherein said envelope (2) is of essentially spherical shape with a zenith pole (11), a base pole (12), and a diameter (13) there between; the envelope (2) and the flexible membrane (5) comprising a mutual circular connection site

(14), which is arranged in a distance (15) to the base pole (12) of the envelope (2), and wherein the envelope (2) that partially encloses the second compartment (C2) comprises a coating layer (17) that is tight for the second fluid (G2), **characterized in that** said distance (15) is equal or less than 33% of the diameter (13) of the envelope (2); said flexible membrane (5) assuming, when the second compartment (C2) is empty, the shape of a spherical calotte with a calotte height that is essentially equal to said distance (15), **and in that** the inside surface (3) of the envelope (2) that partially encloses the first compartment (C1) and the upper surface (6) of the flexible membrane (5) comprise a common cover layer (16) that is tight for the lifting fluid (G1).

2.  The lifting module (1) of claim 1, **characterized in that** the lifting module (1) further comprises:

    (e) a rigid frame (18) defining an opening (19) and being arranged on the outside surface (4) of said envelope (2), wherein at least 67% of the diameter (13) of said envelope (2), when filled with said lifting fluid (G1), protrudes upwards through said opening (19), and wherein said rigid frame (18) is accomplished for wearing a pay load (100) that is attached to the lifting module (1);
    (f) a suspension net (20) attached to said frame (18) for holding said envelope (2) in said frame (18); and
    (g) a drive (21) accomplished to actuate the conveying means (10) for introducing ballast fluid (G2) into said second compartment (C2) according to an actual need for buoyancy, wherein said ballast fluid (G2) is ambient fluid (G3).

3.  The lifting module (1) of claim 2, **characterized in that** the suspension net (20) comprises vertical ropes (27); said rigid frame (18) of the lifting module (1) being attached to said vertical ropes (27) by lifting winches (28) that are located on the rigid frame (18) and being vertically movable by the action of said lifting winches (28).

4.  The lifting module (1) of one of the claims 2 or 3, **characterized in that** lifting module (1) further comprises:

    (h) a number of tensioning ropes (23) and anchors (24); the tensioning ropes (23) essentially horizontally extending through the envelope (2), the common cover layer (16) as well as across the first compartment (C1) of the lifting module (1); the anchors (24), for connecting each end (25) of a tensioning rope (23) to the rigid frame (18), being located at each one of said tensioning rope ends (25).

5.  The lifting module (1) of claim 4, **characterized in that** the tensioning ropes (23) comprise on each one of their ends (25) an inside washer (31) and an outside washer (32) for holding the tensioning ropes (23) in place relative to the envelope (2) of the lifting module (1).

6.  The lifting module (1) of claim 5, **characterized in that** the rigid frame (18) comprises catches (33) that are movably attached to the rigid frame (18), the catches (33) being accomplished to engage over said anchors (24) for forming a force-fit connection between said rigid frame (18) and said tensioning ropes (23) and thus fixing an operational position of the rigid frame (18).

7.  The lifting module (1) of claim 5, **characterized in that** the rigid frame (18) comprises catch parts (43) that are attached to the rigid frame (18), the catch parts (43) being accomplished to engage between said anchors (24) and outside washers 32 for forming a force-fit connection between said rigid frame (18) and said tensioning ropes (23) and thus fixing an operational position of the rigid frame (18).

8.  The lifting module (1) of one of the claims 2 to 7, **characterized in that** the lifting module (1) comprises two main engines (29) attached to said frame (18), said main engines (29) being designed to provide thrust with respect to said ambient fluid (G3) for providing a relative movement or thrust of said lifting module (1) in the ambient fluid (G3).

9.  The lifting module (1) of claim 4, **characterized in that** the rigid frame (18) comprises a first ring member (22), to which said anchors (24) rigidly are connected, **and in that** the rigid frame (18) comprises a second ring member (26), which is attached to vertical ropes (27) of the suspension net (20) by lifting winches (28), and which second ring member (26) is vertically movable with respect to the first ring member (22) by the action of said lifting winches (28) that are attached to the second ring member (26) and that engage with the vertical ropes (27) of the suspension net (20).

10. The lifting module (1) of one of the claims 2 or 9, **characterized in that** the rigid frame (18) of the lifting module (1) at least comprises one of an inside built cockpit, inside built cabins and an inside built storage room, and fuel tanks.

**11.** The lifting module (1) of claim 9, **characterized in that** the lifting module (1) comprises two main engines (29) attached to said second ring member (26) of said frame (18), said main engines (29) being designed to provide thrust with respect to the ambient fluid (G3) for providing a relative movement or thrust of said lifting module (1) in the ambient fluid (G3).

**12.** The lifting module (1) of claims 8 or 11, **characterized in that** the main engines (29) are also accomplished and capable to act as the drive (21) for actuating the conveying means (10) for introducing ballast fluid (G2) into said second compartment (C2) according to an actual need for buoyancy and for providing power to the winches (28,36) and other equipment.

**13.** Air lifter (40) comprising at least one lifting module (1) according to one of the claims 1 to 12, **characterized in that** the lifting fluid (G1) is helium or a helium-hydrogen mix, the ambient fluid (G3) and the ballast fluid (G2) being air.

**14.** The air lifter (40) of claim 13, comprising at least two lifting modules (1), **characterized in that** at least one of the lifting modules (1) comprises at least one torsion winch (36) for winding a torsion rope (38) that is attached to the rigid frame (18) of to the other one of the lifting modules (1), **in that** the zenith poles (11) of the lifting modules (1) are linked to each other by a stay (39), **and in that** the lifting modules (1) are touching each other at coupling elements (37) located on the outside surface (4) of the envelope (2) and on the rigid frame (18).

**15.** The air lifter (40) of claim 14, **characterized in that** the coupling elements (37) comprise a first mating element (37') comprising bolts (41) and a second mating element (37") comprising holes (42), the size of the bolts (41) and holes (42) fitting.

**16.** Submarine lifter (47) comprising at least one lifting module (1) according to one of the claims 1 to 12, **characterized in that** lifting fluid (G1) is air, the ambient fluid (G3) and the ballast fluid (G2) being water.

**17.** Method of controlled lifting a pay load with a lifting module (1), the method comprising the steps of providing:

(a) an envelope (2), comprising an inside surface (3) and an outside surface (4) and with a lifting fluid (G1) stored therein; the envelope (2) being of essentially spherical shape with a zenith pole (11), a base pole (12), and a diameter (13) there between;
(b) a flexible membrane (5), comprising an upper surface (6) and a lower surface (7), extending inside said envelope (2) and being arranged so that said envelope (2) together with said flexible membrane (5) define a first compartment (C1) and a second compartment (C2) inside the envelope (2);
(c) a valve (8) for inflating or deflating lifting fluid (G1) into or from said first compartment (C1);
(d) a fluid inlet (9) and conveying means (10) for inflating or deflating a second fluid (G2) through said fluid inlet (9) into or from said second compartment (C2),
(e) a rigid frame (18) defining an opening (19) and being connected to and arranged on the outside surface (4) of said envelope (2), wherein at least 67% of the diameter (13) of said envelope (2), when filled with said lifting fluid (G1), protrudes upwards through said opening (19), and wherein said rigid frame (18) is accomplished for wearing a pay load (100) that is attached to the lifting module (1);
(f) a suspension net (20) attached to said frame (18) for holding said envelope (2) in said frame (18); and
(g) a drive (21) accomplished to actuate the conveying means (10) for introducing ballast fluid (G2) into said second compartment (C2) according to an actual need for buoyancy, wherein said ballast fluid (G2) is ambient fluid (G3),

**wherein** the envelope (2) and the flexible membrane (5) comprise a mutual circular connection site (14), which is arranged in a distance (15) to the base pole (12) of the envelope (2), said distance (15) being equal or less than 33% of the diameter (13) of the envelope (2) and said flexible membrane (5) assuming, when the second compartment (C2) is empty, the shape of a spherical calotte with a calotte height that is essentially equal to said distance (15); **wherein** the inside surface (3) of the envelope (2) that partially encloses the first compartment (C1) and the upper surface (6) of the flexible membrane (5) comprise a common cover layer (16) that is tight for the lifting fluid (G1); **wherein** the envelope (2) that partially encloses the second compartment (C2) comprises a coating layer (17) that is tight for the second fluid (G2); **and wherein** the method further comprises the step of:

(h) providing a load hook (44) that is attached to the rigid frame (18) by suspension ropes (45), and
(i) attaching a payload (100) to the load hook (40).

**18.** The method of claim 17,
**wherein** a load hook (44) with a turnable portion is provided and winches on this turnable portion of the load hook (44) are used to lift and lower the payload (100).

**Patentansprüche**

**1.** Hebemodul (1), umfassend:

(a) eine Hülle (2) umfassend eine Innenfläche (3) und eine Außenfläche (4) zur Speicherung eines Hebefluids (G1);
(b) eine flexible Membran (5) umfassend eine Oberseite (6) und eine Unterseite (7), die sich innerhalb der Hülle (2) erstreckt und derart angeordnet ist, dass die Hülle (2) zusammen mit der flexiblen Membran (5) eine erste Kammer (C1) und eine zweite Kammer (C2) innerhalb der Hülle (2) definiert;
(c) ein Ventil (8), um Hebefluid (G1) in die erste Kammer (C1) einzulassen oder daraus abzulassen; und
(d) einen Fluideinlass (9) und Fördermittel (10), um ein zweites Fluid (G2) durch den Fluideinlass (9) in die zweite Kammer (C2) einzulassen oder daraus abzulassen,

wobei die Hülle (2) im Wesentlichen kugelförmig ist und einen Zenitpol (11), einen Basispol (12) und einen dazwischen befindlichen Durchmesser (13) aufweist; wobei die Hülle (2) und die flexible Membran (5) eine gemeinsame kreisförmige Verbindungsstelle (14) umfassen, die in einem Abstand (15) zum Basispol (12) der Hülle (2) angeordnet ist, und wobei die Hülle (2), welche die zweite Kammer (C2) teilweise umschließt, eine Beschichtungsschicht (17) umfasst, die gegenüber dem zweiten Fluid (G2) dicht ist, **dadurch gekennzeichnet, dass** der Abstand (15) gleich oder kleiner als 33% des Durchmessers (13) der Hülle (2) ist; wobei die flexible Membran (5), wenn die zweite Kammer (C2) leer ist, die Form einer Kugelkalotte annimmt, wobei die Kalottenhöhe im Wesentlichen gleich dem Abstand (15) ist; **und dass** die Innenfläche (3) der Hülle (2), welche die erste Kammer (C1) teilweise umschließt, und die Oberseite (6) der flexiblen Membran (5) eine gemeinsame Deckschicht (16) umfassen, die gegenüber dem Hebefluid (G1) dicht ist.

**2.** Hebemodul (1) nach Anspruch 1, **dadurch gekennzeichnet, dass** das Hebemodul (1) ferner Folgendes umfasst:

(e) einen starren Rahmen (18), der eine Öffnung (19) definiert und an der Außenfläche (4) der Hülle (2) angeordnet ist, wobei wenigstens 67% des Durchmessers (13) der Hülle (2), wenn diese mit dem Hebefluid (G1) gefüllt ist, nach oben durch die Öffnung (19) vorragt, und wobei der starre Rahmen (18) dafür ausgelegt ist, eine Nutzlast (100) zu tragen, die an dem Hebemodul (1) befestigt ist;
(f) ein an dem Rahmen (18) befestigtes Tragnetz (20), um die Hülle (2) in dem Rahmen (18) zu halten; und
(g) einen Antrieb (21), der dafür ausgelegt ist, das Fördermittel (10) zu betätigen, um in Abhängigkeit von einem tatsächlichen Bedarf nach Auftrieb ein Ballastfluid (G2) in die zweite Kammer (C2) einzuführen, wobei das Ballastfluid (G2) Umgebungsfluid (G3) ist.

**3.** Hebemodul (1) nach Anspruch 2, **dadurch gekennzeichnet, dass** das Aufhängenetz (20) vertikale Seile (27) umfasst;
wobei der starre Rahmen (18) des Hebemoduls (1) durch Hebewinden (28), die an dem starren Rahmen (18) angeordnet sind, an den vertikalen Seilen (27) befestigt ist und durch die Betätigung der Hebewinden (28) vertikal bewegbar ist.

**4.** Hebemodul (1) nach einem der Ansprüche 2 oder 3, **dadurch gekennzeichnet, dass** das Hebemodul (1) ferner Folgendes umfasst:

(h) eine Anzahl von Spannseilen (23) und Ankern (24); wobei sich die Spannseile (23) im Wesentlichen horizontal durch die Hülle (2), durch die gemeinsame Deckschicht (16) sowie durch die erste Kammer (C1) des Hebemoduls (1) erstrecken; wobei die Anker (24) an jedem Ende (25) der Spannseile angeordnet sind, um jedes Ende (25) eines Spannseils (23) mit dem starren Rahmen (18) zu verbinden.

**5.** Hebemodul (1) nach Anspruch 4, **dadurch gekennzeichnet, dass** die Spannseile (23) an jedem ihrer Enden (25) eine innere Dichtungsscheibe (31) und eine äußere Dichtungsscheibe (32) umfassen, um die Spannseile (23) an ihrem Platz relativ zur Hülle (2) des Hebemoduls (1) zu halten.

**6.** Hebemodul (1) nach Anspruch 5, **dadurch gekennzeichnet, dass** der starre Rahmen (18) Arretierungen (33) umfasst, die beweglich an dem starren Rahmen (18) angebracht sind, wobei die Arretierungen (33) dafür ausgelegt sind, sich über die Anker (24) zu legen, um eine kraftschlüssige Verbindung zwischen dem starren Rahmen (18) und den Spannseilen (23) zu bilden und dadurch eine Arbeitsstellung des starren Rahmens (18) zu fixieren.

**7.** Hebemodul (1) nach Anspruch 5, **dadurch gekennzeichnet, dass** der starre Rahmen (18) Sperrstücke (43) umfasst, die an dem starren Rahmen (18) befestigt sind, wobei die Sperrstücke (43) dafür ausgelegt sind, zwischen den Ankern (24) und den äußeren Dichtungsscheiben 32 einzugreifen, um eine kraftschlüssige Verbindung zwischen dem starren Rahmen (18) und den Spannseilen (23) zu bilden und dadurch eine Arbeitsstellung des starren Rahmens (18) zu fixieren.

**8.** Hebemodul (1) nach einem der Ansprüche 2 bis 7, **dadurch gekennzeichnet, dass** das Hebemodul (1) zwei Antriebsmaschinen (29) umfasst, die an dem Rahmen (18) befestigt sind, wobei die Antriebsmaschinen (29) dafür ausgelegt sind, einen Schub in Bezug auf das Umgebungsfluid (G3) bereitzustellen, um eine relative Bewegung oder einen Schub des Hebemoduls (1) in dem Umgebungsfluid (G3) zu bewirken.

**9.** Hebemodul (1) nach Anspruch 4, **dadurch gekennzeichnet, dass** der starre Rahmen (18) ein erstes Ringelement (22) umfasst, mit dem die Anker (24) starr verbunden sind, **und dass** der starre Rahmen (18) ein zweites Ringelement (26) umfasst, das durch Hebewinden (28) an den vertikalen Seilen (27) des Tragnetzes (20) befestigt ist, wobei das zweite Ringelement (26) in Bezug auf das erste Ringelement (22) durch die Betätigung der Hebewinden (28) vertikal beweglich ist, die an dem zweiten Ringelement (26) befestigt sind und die sich in Eingriff mit den vertikalen Seilen (27) des Tragnetzes (20) befinden.

**10.** Hebemodul (1) nach einem der Ansprüche 2 oder 9, **dadurch gekennzeichnet, dass** der starre Rahmen (18) des Hebemoduls (1) zumindest ein eingebautes Cockpit oder eine eingebaute Kabine oder einen eingebauten Speicherraum, und Treibstofftanks umfasst.

**11.** Hebemodul (1) nach Anspruch 9, **dadurch gekennzeichnet, dass** das Hebemodul (1) wenigstens zwei Antriebsmaschinen (29) umfasst, die an dem zweiten Ringelement (26) des Rahmens (18) befestigt sind, wobei die Antriebsmaschinen (29) dafür ausgelegt sind, einen Schub in Bezug auf das Umgebungsfluid (G3) bereitzustellen, um eine relative Bewegung oder einen Schub des Hebemoduls (1) in dem Umgebungsfluid (G3) zu bewirken.

**12.** Hebemodul (1) nach Anspruch 8 oder 11, **dadurch gekennzeichnet, dass** die Antriebsmaschinen (29) auch dafür ausgelegt und in der Lage sind, als Antrieb (21) zur Betätigung des Fördermittels (10) zu fungieren, um in Abhängigkeit von einem tatsächlichen Bedarf nach Auftrieb Ballastfluid (G2) in die zweite Kammer (C2) einzubringen und um Leistung für die Winden (28,36) und andere Einrichtungen bereitzustellen.

**13.** Vorrichtung zum Heben in der Luft (40), umfassend wenigstens ein Hebemodul (1) nach einem der Ansprüche 1 bis 12, **dadurch gekennzeichnet, dass** es sich bei dem Hebefluid (G1) um Helium oder ein Helium-Wasserstoff-Gemisch handelt, während es sich bei dem Umgebungsfluid (G3) und dem Ballastfluid (G2) um Luft handelt.

**14.** Vorrichtung zum Heben in der Luft (40) nach Anspruch 13, umfassend wenigstens zwei Hebemodule (1), **dadurch gekennzeichnet, dass** wenigstens eines der Hebemodule (1) wenigstens eine Torsionswinde (36) zum Aufwickeln eines Torsionsseils (38) umfasst, das am starren Rahmen (18) des anderen Hebemoduls (1) befestigt ist, **dass** die Zenitpole (11) der Hebemodule (1) durch ein Zugseil (39) miteinander verbunden sind **und dass** die Hebemodule (1) einander bei Kopplungselementen (37) berühren, die an der Außenfläche (4) der Hülle (2) und am starren Rahmen (18) angeordnet sind.

**15.** Vorrichtung zum Heben in der Luft (40) nach Anspruch 14, **dadurch gekennzeichnet, dass** die Kopplungselemente (37) ein erstes, Bolzen (41) umfassendes Verbindungselement (37') und ein zweites, Löcher (42) umfassendes Verbindungselement (37") umfassen, wobei die Größe der Bolzen (41) und jene der Löcher (42) einander entsprechen.

**16.** Unterwasser-Hebevorrichtung (47), umfassend wenigstens ein Hebemodul (1) nach einem der Ansprüche 1 bis 12, **dadurch gekennzeichnet, dass** es sich bei dem Hebefluid (G1) um Luft handelt, während es sich bei dem Umgebungsfluid (G3) und dem Ballastfluid (G2) um Wasser handelt.

**17.** Verfahren zum kontrollierten Heben einer Nutzlast mit einem Hebemodul (1), wobei das Verfahren die Schritte umfasst, um Folgendes bereitzustellen:

(a) eine Hülle (2) umfassend eine Innenfläche (3) und eine Außenfläche (4) sowie mit einem darin gespeicherten Hebefluid (G1); wobei die Hülle (2) im Wesentlichen kugelförmig ist und einen Zenitpol (11), einen Basispol (12) und einen dazwischen befindlichen Durchmesser (13) aufweist;

(b) eine flexible Membran (5) umfassend eine Oberseite (6) und eine Unterseite (7), die sich innerhalb der Hülle (2) erstreckt und derart angeordnet ist, dass die Hülle (2) zusammen mit der flexiblen Membran (5) eine erste Kammer (C1) und eine zweite Kammer (C2) innerhalb der Hülle (2) definiert;

(c) ein Ventil (8), um ein Hebefluid (G1) in die erste Kammer (C1) einzulassen oder daraus abzulassen;

(d) einen Fluideinlass (9) und Fördermittel (10), um ein zweites Fluid (G2) durch den Fluideinlass (9) in die zweite Kammer (C2) einzulassen oder daraus abzulassen,

(e) einen starren Rahmen (18), der eine Öffnung (19) definiert und mit der Außenfläche (4) der Hülle (2) verbunden ist und daran angeordnet ist, wobei wenigstens 67% des Durchmessers (13) der Hülle (2), wenn diese mit dem Hebefluid (G1) gefüllt ist, nach oben durch die Öffnung (19) vorragt und wobei der starre Rahmen (18) dafür ausgelegt ist, eine Nutzlast (100) zu tragen, die an dem Hebemodul (1) befestigt ist;

(f) ein an dem Rahmen (18) befestigtes Tragnetz (20), um die Hülle (2) in dem Rahmen (18) zu halten; und

(g) einen Antrieb (21), der dafür ausgelegt ist, das Fördermittel (10) zu betätigen, um in Abhängigkeit von einem tatsächlichen Bedarf nach Auftrieb ein Ballastfluid (G2) in die zweite Kammer (C2) einzuführen, wobei das Ballastfluid (G2) Umgebungsfluid (G3) ist,

**wobei** die Hülle (2) und die flexible Membran (5) eine gemeinsame kreisförmige Verbindungsstelle (14) umfassen, die in einem Abstand (15) zum Basispol (12) der Hülle (2) angeordnet ist, wobei der Abstand (15) gleich oder kleiner als 33% des Durchmessers (13) der Hülle (2) ist und wobei die flexible Membran (5), wenn die zweite Kammer (C2) leer ist, die Form einer Kugelkalotte annimmt, wobei die Kalottenhöhe im Wesentlichen gleich dem Abstand (15) ist; **wobei** die Innenfläche (3) der Hülle (2), welche die erste Kammer (C1) teilweise umschließt, und die Oberseite (6) der flexiblen Membran (5) eine gemeinsame Deckschicht (16) umfassen, die gegenüber dem Hebefluid (G1) dicht ist; **wobei** die Hülle (2), welche die zweite Kammer (C2) teilweise umschließt, eine Beschichtungsschicht (17) umfasst, die gegenüber dem zweiten Fluid (G2) dicht ist; **und wobei** das Verfahren ferner die folgenden Schritte umfasst:

(h) Bereitstellen eines Lasthakens (44), der durch Aufhängeseile (45) an dem starren Rahmen (18) befestigt ist, und

(i) Befestigen einer Nutzlast (100) an dem Lasthaken (44).

**18.** Verfahren nach Anspruch 17,
**wobei** ein Lasthaken (44) mit einem drehbaren Abschnitt bereitgestellt wird und Winden an diesem drehbaren Abschnitt des Lasthakens (44) verwendet werden, um die Nutzlast (100) zu heben und zu senken.

**Revendications**

**1.** Module de levage (1) comprenant :

(a) une enveloppe (2) comprenant une surface intérieure (3) et une surface extérieure (4), pour stocker un fluide de levage (G1) ;

(b) une membrane flexible (5) comprenant une surface supérieure (6) et une surface inférieure (7), qui s'étend à l'intérieur de ladite enveloppe (2) et qui est disposée de telle manière que ladite enveloppe (2) définisse avec ladite membrane flexible (5) un premier compartiment (C1) et un second compartiment (C2) à l'intérieur de l'enveloppe (2) ;

(c) une valve (8) pour gonfler et dégonfler ledit premier compartiment (C1) avec du fluide de levage (G1) ; et

(d) une entrée de fluide (9) et des moyens d'acheminement (10) pour gonfler et dégonfler ledit second compartiment (C2) avec un second fluide (G2) à travers ladite entrée de fluide (9) ;

dans lequel ladite enveloppe (2) est de forme essentiellement sphérique avec un pôle de zénith (11), un pôle de base (12) et un diamètre (13) entre ceux-ci, l'enveloppe (2) et la membrane flexible (5) comprenant un site de liaison mutuelle circulaire (14) qui est disposé à distance (15) du pôle de base (12) de l'enveloppe (2), et dans lequel l'enveloppe (2) qui renferme partiellement le second compartiment (C2) comprend une couche de revêtement (17) qui est imperméable au second fluide (G2), **caractérisé en ce que** ladite distance (15) est égale ou inférieure à 33 % du diamètre (13) de l'enveloppe (2), ladite membrane flexible (5) adoptant, quand le second compartiment (C2) est vide, la forme d'une calotte sphérique ayant une hauteur de calotte essentiellement égale à ladite distance (15), et **en ce que** la surface intérieure (3) de l'enveloppe (2) qui renferme partiellement le premier compartiment (C1) et la surface supérieure (6) de la membrane flexible (5) comprennent une couche de couverture commune (16) qui est imperméable au fluide de levage (G1).

2. Module de levage (1) selon la revendication 1, **caractérisé en ce que** le module de levage (1) comprend en outre :

   (e) un cadre rigide (18) définissant une ouverture (19) et disposé sur la surface extérieure (4) de ladite enveloppe (2), au moins 67 % du diamètre (13) de ladite enveloppe (2) dépassant vers le haut à travers l'ouverture (19) quand elle est remplie dudit fluide de levage (G1), et ledit cadre rigide (18) étant conçu pour supporter une charge utile (100) qui est fixée au module de levage (1) ;
   (f) un filet de suspension (20) attaché audit cadre (18) pour retenir ladite enveloppe (2) dans ledit cadre (18) ; et
   (g) un entraînement (21) conçu pour actionner les moyens d'acheminement (10) afin d'introduire du fluide de lest (G2) dans ledit second compartiment (C2) en fonction du besoin effectif de portance, ledit fluide de lest (G2) étant le fluide ambiant (G3).

3. Module de levage (1) selon la revendication 2, **caractérisé en ce que** le filet de suspension (20) comprend des cordes verticales (27), ledit cadre rigide (18) du module de levage (1) étant fixé auxdites cordes verticales (27) par des treuils de levage (28) qui sont situés sur le cadre rigide (18) et pouvant être déplacé verticalement par l'action desdits treuils de levage (28).

4. Module de levage (1) selon l'une des revendications 2 ou 3, **caractérisé en ce que** le module de levage (1) comprend en outre :

   (h) plusieurs cordes de mise en tension (23) et ancrages (24), les cordes de mise en tension (23) s'étendant de façon essentiellement horizontale à travers l'enveloppe (2), la couche de couverture commune (16) et en travers du premier compartiment (C1) du module de levage (1), les ancrages (24) destinés à relier chaque extrémité (25) d'une corde de mise en tension (23) au cadre rigide (18) se trouvant à chacune desdites extrémités des cordes de mise en tension (25).

5. Module de levage (1) selon la revendication 4, **caractérisé en ce que** les cordes de mise en tension (23) comprennent à chacune de leurs extrémités (25) une rondelle intérieure (31) et une rondelle extérieure (32) pour maintenir les cordes de mise en tension (23) en place par rapport à l'enveloppe (2) du module de levage (1).

6. Module de levage (1) selon la revendication 5, **caractérisé en ce que** le cadre rigide (18) comporte des cliquets d'accrochage (33) qui sont fixés de manière mobile au cadre rigide (18), les cliquets d'accrochage (33) étant conçus pour se mettre en prise pardessus lesdits ancrages (24) afin de former un assemblage étant solidaire entre ledit cadre rigide (18) et lesdites cordes de mise en tension (23) et de fixer ainsi une position de fonctionnement du cadre rigide (18).

7. Module de levage (1) selon la revendication 5, **caractérisé en ce que** le cadre rigide (18) comprend des pièces de blocage (43) qui sont fixées au cadre rigide (18), les pièces de blocage (43) étant conçues pour se mettre en prise entre lesdits ancrages (24) et les rondelles extérieures (32) afin de former un assemblage étant solidaire entre ledit cadre rigide (18) et lesdites cordes de mise en tension (23) et de fixer ainsi une position de fonctionnement du cadre rigide (18).

8. Module de levage (1) selon l'une des revendications 2 à 7, **caractérisé en ce que** le module de levage (1) comprend deux moteurs principaux (29) fixés audit cadre (18), lesquels moteurs principaux (29) sont conçus pour fournir une poussée par rapport audit fluide ambiant (G3) afin de créer un mouvement relatif ou une poussée dudit module de levage (1) dans le fluide ambiant (G3).

9. Module de levage (1) selon la revendication 4, **caractérisé en ce que** le cadre rigide (18) comprend un premier élément annulaire (22) auquel lesdits ancrages (24) sont reliés de façon rigide et **en ce que** le cadre rigide (18) comprend un second élément annulaire (26) qui est fixé aux cordes verticales (27) du filet de suspension (20) par des treuils de levage (28), lequel second élément annulaire (26) est déplaçable verticalement par rapport au premier élément annulaire (22) par l'action desdits treuils de levage (28) qui sont fixés au second élément annulaire (26) et qui se mettent en prise avec les cordes verticales (27) du filet de suspension (20).

**10.** Module de levage (1) selon l'une des revendications 2 ou 9, **caractérisé en ce que** le cadre rigide (18) du module de levage (1) comprend au moins soit un poste de pilotage intérieur, soit des cabines intérieures, soit une cale de stockage intérieure, et des réservoirs de carburant.

**11.** Module de levage (1) selon la revendication 9, **caractérisé en ce que** le module de levage (1) comprend deux moteurs principaux (29) fixés audit second élément annulaire (26) dudit cadre (18), lesquels moteurs principaux (29) sont conçus pour produire une poussée par rapport au fluide ambiant (G3) afin de créer un mouvement relatif ou une poussée dudit module de levage (1) dans le fluide ambiant (G3).

**12.** Module de levage (1) selon la revendication 8 ou 11, **caractérisé en ce que** les moteurs principaux (29) sont également conçus et réalisés pour pouvoir servir d'entraînement (21) pour actionner les moyens d'acheminement (10) afin d'introduire du fluide de lest (G2) dans ledit second compartiment (C2) en fonction d'un besoin effectif de portance et pour fournir de la puissance aux treuils (28, 36) et autres équipements.

**13.** Engin de levage aérien (40) comprenant au moins un module de levage (1) selon l'une des revendications 1 à 12, **caractérisé en ce que** le fluide de levage (G1) est de l'hélium ou un mélange d'hélium et d'hydrogène, le fluide ambiant (G3) et le fluide de lest (G2) étant de l'air.

**14.** Engin de levage aérien (40) selon la revendication 13, comprenant au moins deux modules de levage (1), **caractérisé en ce qu'**au moins un des modules de levage (1) comprend au moins un treuil à torsion (36) pour enrouler une corde de torsion (38) fixée au cadre rigide (18) de l'autre module de levage (1), **en ce que** les pôles de zénith (11) des modules de levage (1) sont reliés l'un à l'autre par un hauban (39) et **en ce que** les modules de levage (1) se touchent au niveau d'éléments de couplage (37) situés sur la surface extérieure (4) de l'enveloppe (2) et sur le cadre rigide (18).

**15.** Engin de levage aérien (40) selon la revendication 14, **caractérisé en ce que** les éléments de couplage (37) comprennent un premier élément d'accouplement (37') comprenant des boulons (41) et un second élément d'accouplement (37") comprenant des trous (42), la taille des boulons (41) étant adaptée à celle des trous (42).

**16.** Engin de levage sous-marin (47) comprenant au moins un module de levage (1) selon l'une des revendications 1 à 12, **caractérisé en ce que** fluide de levage (G1) est de l'air, le fluide ambiant (G3) et le fluide de lest (G2) étant de l'eau.

**17.** Procédé de levage contrôlé d'une charge utile avec un module de levage (1), lequel procédé comprend les étapes de préparation de :

(a) une enveloppe (2) comprenant une surface intérieure (3) et une surface extérieure (4), pour stocker un fluide de levage (G1), l'enveloppe (2) ayant une forme essentiellement sphérique avec un pôle de zénith (11), un pôle de base (12) et un diamètre (13) entre ceux-ci ;
(b) une membrane flexible (5) comprenant une surface supérieure (6) et une surface inférieure (7), qui s'étend à l'intérieur de ladite enveloppe (2) et qui est disposée de telle manière que ladite enveloppe (2) définisse avec ladite membrane flexible (5) un premier compartiment (C1) et un second compartiment (C2) à l'intérieur de l'enveloppe (2) ;
(c) une valve (8) pour gonfler et dégonfler ledit premier compartiment (C1) avec du fluide de levage (G1) ; et
(d) une entrée de fluide (9) et des moyens d'acheminement (10) pour gonfler et dégonfler ledit second compartiment (C2) avec un second fluide (G2) à travers ladite entrée de fluide (9) ;
(e) un cadre rigide (18) définissant une ouverture (19) et disposé sur la surface extérieure (4) de ladite enveloppe (2) et relié à celle-ci, au moins 67 % du diamètre (13) de ladite enveloppe (2) dépassant vers le haut à travers l'ouverture (19) quand elle est remplie dudit fluide de levage (G1), et ledit cadre rigide (18) étant conçu pour supporter une charge utile (100) qui est fixée au module de levage (1) ;
(f) un filet de suspension (20) attaché audit cadre (18) pour retenir ladite enveloppe (2) dans ledit cadre (18) ; et
(g) un entraînement (21) conçu pour actionner les moyens d'acheminement (10) afin d'introduire du fluide de lest (G2) dans ledit second compartiment (C2) en fonction du besoin effectif de portance, ledit fluide de lest (G2) étant le fluide ambiant (G3),

dans lequel l'enveloppe (2) et la membrane flexible (5) comprennent un site de liaison mutuelle circulaire (14) qui est disposé à distance (15) du pôle de base (12) de l'enveloppe (2), ladite distance (15) étant égale ou inférieure à 33 % du diamètre (13) de l'enveloppe (2) et ladite membrane flexible (5) adoptant, quand le second compartiment (C2) est vide, la forme d'une calotte sphérique ayant une hauteur de calotte essentiellement égale à ladite distance (15), et dans lequel la surface intérieure (3) de l'enveloppe (2) qui renferme partiellement le premier compartiment (C1) et la surface supérieure (6) de la membrane flexible (5) comprennent une couche de couverture commune (16) qui est imperméable au fluide de levage (G1), et dans lequel l'enveloppe (2) qui renferme partiellement le second compartiment (C2) comprend une couche de revêtement (17) qui est imperméable au second fluide (G2), le procédé comprenant en outre l'étape de :

> (h) préparation d'un crochet de charge (44) qui est fixé au cadre rigide (18) par des cordes de suspension (45) et
> (i) accrochage d'une charge utile (100) au crochet de charge (44).

18. Procédé selon la revendication 17, dans lequel un crochet de charge (44) ayant une partie pivotante est prévu et des treuils sur cette partie pivotante du crochet de charge (44) sont utilisés pour lever et abaisser la charge utile (100).

Fig. 1

Fig. 2

Fig. 3

Fig. 4

Fig. 5

Fig. 6

Fig. 7

(G3)

Fig. 8

(G3)

Fig. 9

(G3)

Fig. 10

Fig. 11

Fig. 12

Fig. 13

**EP 2 619 083 B1**

**REFERENCES CITED IN THE DESCRIPTION**

**Patent documents cited in the description**

- WO 2006137880 A2
- US 20090072082 A1
- US 20020167702 A1